# EUROPÄISCHE PATENTSCHRIFT

(11) **EP 2 809 958 B1**
(45) Veröffentlichungstag und Bekanntmachung des Hinweises auf die Patenterteilung: **03.08.2022**
(21) Anmeldenummer: 13704045.7
(22) Anmeldetag: 01.02.2013
(51) Int. Cl.: F16B 23/00, B21K 1/70, F16B 37/00, F16B 33/00, F16B 39/284

(54) **MUTTER**
NUT
ÉCROU

(30) Priorität: 01.02.2012 DE 102012100850
(43) Veröffentlichungstag der Anmeldung: 10.12.2014
(73) Patentinhaber: Hewi G. Winker GmbH & Co. KG, 78549 Spaichingen (DE)
(72) Erfinder: UNSELD, Peter, 88677 Markdorf (DE); MESSMER, Günther, 78589 Dürbheim (DE)
(74) Vertreter: Hoeger, Stellrecht & Partner Patentanwälte mbB
(86) Internationale Anmeldenummer: PCT/EP2013/052029
(87) Internationale Veröffentlichungsnummer: WO 2013/113871

(56) Entgegenhaltungen:
- EP-A1- 0 093 218
- EP-A1- 0 214 688
- EP-A1- 0 488 500
- DE-A1- 2 937 980
- DE-A1-102005 015 661
- DE-C- 82 098
- FR-A- 1 451 101
- GB-A- 985 714
- US-A- 2 440 944
- US-A- 3 277 942
- US-A- 3 456 704
- US-A- 3 687 182
- US-A- 4 759 237
- US-A- 5 324 149
- US-A1- 2011 226 069
- B Buchmayr ET AL: "Werkstoff- und verfahrenstechnische Optimierung bei der Herstellung hochfester Schrauben", BHM, 153.Jg.(2008) Heft 11, 1. Januar 2008 (2008-01-01), Seiten 423-429, XP055072480, Gefunden im Internet: URL:http://rd.springer.com/content/pdf/10. 1007/s00501-008-0415-0.pdf [gefunden am 2013-07-23]

## Beschreibung

Die Erfindung betrifft eine Mutter, umfassend einen im Bereich einer Bohrung mit einem Innengewinde versehenen oder versehbaren Mutternkörper, der einen Mehrkantabschnitt mit einer Mehrkantaußenkontur aufweist, die einerseits Kantenbereiche und andererseits zwischen den Kantenbereichen liegende Schlüsselflächen aufweist, die sich in normgerecht verlaufenden Schlüsselflächenebenen erstrecken.

Derartige Muttern sind übliche, aus dem Stand der Technik bekannte Mehrkantmuttern, wobei Lage und Ausrichtung und Verlauf der Schlüsselflächen sich beispielsweise normativen Grundlagen, beispielsweise DIN EN 1661, 1663, 1664, 1667, DIN EN ISO 4032 - 4036, DIN EN ISO 8673 - 8675, DIN EN ISO 7040 - 7042, DIN EN ISO 7719, DIN EN ISO 10511 - 10513 sowie DIN EN ISO 4759 - 1 ergeben.

US 3,277,942 offenbart eine Mutter mit einem Gewinde und Schlüsselflächen, wobei die Wände mit den Schlüsselflächen radial nach innen deformierte Abschnitte aufweisen.

Die Muttern können bereits mit einem Innengewinde versehen sein oder nur mit einer Bohrung versehen sein in welcher ein Innengewinde beim Eindrehen selbstformender oder selbstschneidender Schrauben entsteht.

Bei derartigen Muttern besteht der Bedarf, bei möglichst vorteilhaften mechanischen Gebrauchseigenschaften das Gewicht derselben zu reduzieren.

Der Erfindung liegt daher die Aufgabe zugrunde, eine Mutter der gattungsgemäßen Art derart zu optimieren, dass diese möglichst optimale mechanische Eigenschaften bei möglichst geringem Gewicht aufweist.

Diese Aufgabe wird erfindungsgemäß bei einer Mutter gemäß Anspruch 1 gelöst. Weitere vorteilhafte Ausführungsformen sind in den Unteransprüchen definiert.

Der Vorteil der erfindungsgemäßen Lösung ist darin zu sehen, dass durch die sich in den Mutternkörper hinein erstreckenden Ausnehmungen eine Materialersparnis und somit eine Gewichtsreduktion erreicht werden kann, ohne die mechanischen Eigenschaften des Mutternkörpers negativ zu beeinträchtigen.

Hinsichtlich der Anordnung der Ausnehmungen wurden dabei keine näheren Angaben gemacht.

So sieht eine vorteilhafte Lösung vor, dass sich jeweils ausgehend von einander gegenüberliegenden Schlüsselflächenebenen Ausnehmungen in den Mutternkörper hinein erstrecken.

Im einfachsten Fall wären dies zwei einander gegenüberliegende Schlüsselflächenebenen, von denen ausgehend sich Ausnehmungen in den Mutternkörper hinein erstrecken.

Es können aber auch mehrere Schlüsselflächenebenen sein, von denen ausgehend sich Ausnehmungen in den Mutternkörper hinein erstrecken.

Noch vorteilhafter ist jedoch die Gewichtsersparnis, wenn sich ausgehend von jeder Schlüsselflächenebene des Mehrkantabschnitts eine Ausnehmung in den Mutternkörper hinein erstreckt.

Hinsichtlich der Erstreckung der Ausnehmung in den Mutternkörper hinein wurden im Zusammenhang mit den bislang beschriebenen Ausführungsbeispielen keine näheren Angaben gemacht.

Es ist vorgesehen, dass die Ausnehmungen sich von der jeweiligen Schlüsselflächenebene bis zu einem das Innengewinde oder die mit dem Innengewinde versehbare Bohrung stabilisierend umschließenden Gewindeträgermantel erstrecken, das heißt, vorteilhafterweise, dass die Ausnehmungen lediglich bis zu dem Gewindeträgermantel, nicht jedoch über diesen hinaus verlaufen.

Der Gewindeträgermantel ist dabei ein in Umfangsrichtung geschlossener Bereich des Mutternkörpers, der das Innengewinde stabilisierend umschließt und dafür sorgt, dass das Innengewinde sich bei einer Beanspruchung durch einen in dieses eingeschraubten Gewindebolzen oder eine in diesen eingeschraubte Schraube nicht über einen definierten Betrag hinaus verformt, insbesondere aufweitet, und somit seine für die Kraft- und/oder Momentenaufnahme erforderliche Form oder Formfestigkeit verliert.

Besonders vorteilhaft ist es dabei, wenn der Gewindeträgermantel ausgehend von einem Außendurchmessers des Innengewindes eine radiale Mindestdicke aufweist, die ein mindestens 0,05-faches des Außendurchmessers des Innengewindes beträgt.

Dabei wird eine radiale Mindestdicke an der in radialer Richtung dünnsten Stelle des Gewindeträgermantels gemessen, der insbesondere ein integraler Teil des Mutternkörpers ist und an jeder Stelle die radiale Mindestdicke aufweist, so dass durch die radiale Mindestdicke die Stabilität des Gewindeträgermantels festgelegt ist.

Dabei kann die radiale Mindestdicke des Gewindeträgermantels in Richtung der Mittelachse invariant sein.

Es ist aber auch denkbar, dass die radiale Mindestdicke des Gewindeträgermantels in Richtung der Mittelachse variabel ist.

Prinzipiell ist es bei hierin offenbarten Lösungen denkbar, den Mutternkörper derart auszubilden, dass dieser sich zwischen einer ersten Stirnseite und einer zweiten Stirnseite erstreckt und dabei jede der Stirnseiten dazu geeignet ist, einen Körper oder ein Element zur Fixierung desselben mittels der Mutter zu beaufschlagen.

Um jedoch die erfindungsgemäße Mutter im Hinblick auf die Krafteinleitung in den Mutternkörper optimieren zu können, ist vorgesehen, dass der Mutternkörper eine als Druckseite mit einer Druckfläche ausgebildete erste Stirnseite und eine der Druckseite abgewandte zweite Stirnseite aufweist, zwischen denen sich der Mutternkörper erstreckt.

Diese Lösung hat den Vorteil, dass sich damit die Mutter dahingehend optimieren lässt, dass im Bereich der Druckseite die beim Beaufschlagen eines Körpers oder eines Elements mit der Mutter auftretenden Kräfte auf den Mutternkörper einwirken und von diesem aufgenommen werden, während bei der zweiten Stirnseite davon auszugehen ist, dass diese keine unmittelbare Kraftbeaufschlagung erfährt.

Bei einer derartigen Mutter ist beispielsweise vorgesehen, dass sich die Ausnehmung bis zur zweiten Stirnseite erstreckt, da im Bereich der zweiten Stirnseite nicht mit einer Kraftbeaufschlagung des Mutternkörpers zu rechnen ist, so dass die auftretende Kräfte im Bereich der zweiten Stirnseite am geringsten sind.

Ferner ist es möglich, den Mutternkörper so auszubilden, dass sich die Ausnehmung bis zur Druckseite erstreckt, wobei in diesem Fall die Formfestigkeit der Druckseite ausreichend groß sein muss, dass sie die vorgesehenen Belastungen aufnimmt.

Bei einer weiteren Ausführungsform ist vorgesehen, dass sich die Ausnehmung nur über einen Teilabschnitt der Erstreckung des Mutternkörpers von der einen Stirnseite bis zur anderen Stirnseite erstreckt, so dass die Ausnehmung nicht die andere Stirnseite erreicht.

Eine andere hierin beschriebene Lösung sieht vor, dass sich die Ausnehmung bis zu einem an der Druckseite vorgesehenen Druckboden erstreckt und somit an dem Druckboden endet, so dass der Mutternkörper im Bereich der Druckseite durch den Druckboden eine zusätzliche Stabilität erfährt.

Bei der erfindungsgemäßen Lösung ist vorgesehen, dass sich die Ausnehmungen bis zu einem an der Druckseite vorgesehenen Druckflansch erstrecken, welcher sich radial über den Mehrkantabschnitt hinaus erstreck.

Auch hinsichtlich der Mindestdicke des Gewindeträgermantels ist es bei Vorhandensein einer Druckseite des Mutternkörpers vorteilhaft, wenn die radiale Mindestdicke des Gewindeträgermantels im Bereich der Druckseite mindestens so groß ist wie im Bereich der zweiten Stirnseite.

Erfindungsgemäß ist vorgesehen, dass die radiale Mindestdicke des Gewindeträgermantels im Bereich der Druckseite größer ist als im Bereich der zweiten Stirnseite, da im Bereich der Druckseite höhere umfangsseitige Lastungen des Gewindeträgermantels durch die Kraftinteraktion zwischen Druckseite und Gewinde entstehen, als im Bereich der zweiten Stirnseite, so dass vorteilhafterweise dadurch der Mutternkörper im Hinblick auf die auftretenden Belastungen optimiert werden kann.

Außerdem ist vorgesehen, dass der Gewindeträgermantel mit zunehmender Erstreckung von der zweiten Stirnseite zur Druckseite eine zunehmende Mindestdicke aufweist, da dadurch in günstiger Weise den ausgehend von der zweiten Stirnseite zunehmenden umfangsseitigen Belastungen des Gewindeträgermantels durch die Kraftinteraktion zwischen Druckseite und Innengewinde optimal Rechnung getragen werden kann.

Hinsichtlich der Ausbildung der Schlüsselflächen wurden bislang keine näheren Angaben gemacht.

So sieht eine vorteilhafte Lösung vor, dass in jeder Schlüsselflächenebene sich an einander gegenüberliegende Kantenbereiche anschließende Schlüsselflächenbereiche liegen, zwischen denen die jeweilige Ausnehmung liegt.

Das heißt, dass die jeweilige Ausnehmung mindestens zwei Schlüsselflächenbereiche aufteilt, die sich jeweils im Anschluss an die Kantenbereiche erstrecken und durch die Ausnehmung zumindest teilweise voneinander getrennt sind und zusammen die Schlüsselfläche bilden.

Hinsichtlich der minimalen Ausdehnung der Schlüsselflächenbereiche in einer Querrichtung zwischen den Kantenbereichen, wobei die Querrichtung parallel zu einer Abstandsrichtung der Kantenbereiche verläuft, ist vorzugsweise vorgesehen, dass in jeder senkrecht zu einer Mittelachse des Innengewindes verlaufenden Querschnittsebene durch den Mehrkantabschnitt die Summe der Ausdehnung der Schlüsselflächenbereiche in einer Querrichtung zwischen jeweils zwei aufeinanderfolgenden Kantenbereichen mindestens 10%, noch besser mindestens 15%, insbesondere mindestens 20%, eines Abstandes dieser Kantenbereiche in der Querrichtung beträgt.

Das heißt, dass die aus den beiden Schlüsselflächenbereichen gebildete Schlüsselfläche auf zehn Prozent der Erstreckung in der Querrichtung reduziert wurde, bezogen auf die Ausdehnung der Schlüsselfläche bei nicht vorhandener Ausnehmung.

Grundsätzlich ist es denkbar, die Ausdehnung der jeweils einzelnen Schlüsselflächenbereiche unterschiedlich zu wählen, wobei die Summe der Ausdehnungen 10% des Abstands der Kantenbereiche beträgt.

Dies wäre beispielsweise denkbar, wenn eine optimierte Anpassung der Schlüsselflächenbereiche an die Belastungen des Mutternkörpers beim Anziehen oder Lösen erfolgen soll.

Beispielsweise ist es bei einem Mutternkörper, der primär festgeschraubt werden soll und nachher in der Regel nicht mehr gelöst wird, denkbar, die beiden Schlüsselflächenbereiche unterschiedlich zu wählen, beispielsweise den beim Festschrauben des Mutternkörpers verstärkt belasteten Schlüsselflächenbereich in der Querrichtung breiter auszuführen, als den weniger belasteten Schlüsselflächenbereich.

Eine vereinfachte Ausführungsform sieht vor, dass beide Schlüsselflächenbereiche in der Querrichtung näherungsweise dieselbe Ausdehnung, vorzugsweise dieselbe Ausdehnung in der Querrichtung, aufweisen.

Hinsichtlich der Ausbildung der Ausnehmungen selbst wurden bislang keine näheren Angaben gemacht.

Die Ausnehmungen könnten hinsichtlich ihrer Erstreckung parallel und radial zur Mittelachse beliebige Formen haben, das heißt, Freiformflächen aufweisen.

Ferner kann jede der Ausnehmungen des Mutternkörpers sich in ihrer Form und oder Ausdehnung von den anderen Ausnehmungen unterscheiden.

Beispielsweise sind jedoch jeweils auf gegenüberliegenden Seiten des Mutternkörpers angeordnete Ausnehmungen gleichartig ausgebildet.

Insbesondere wurde nichts über die Querschnittsform der Ausführungen ausgeführt.

So sieht eine vorteilhafte Lösung vor, dass die Ausnehmungen in einer jeweils senkrecht zu einer Mittelachse des Innengewindes durch den Mehrkantabschnitt verlaufenden Querschnittsebene dieselbe Querschnittsform aufweisen.

Beispielsweise ist es denkbar, dass die Querschnittsform der Ausnehmungen in der jeweiligen Querschnittsebene U-ähnlich ist.

Es ist aber auch denkbar, wenn die Querschnittsform der Ausnehmungen in der jeweiligen Querschnittsebene einer kreissegment-ähnlichen Querschnittsform oder einer rechteckigen oder V-förmigen Querschnittsform angenähert sind.

Eine vorteilhafte Lösung sieht vor, dass die Ausnehmungen eine Querschnittsform aufweisen, welche durch einen Bodenbereich und sich an den Bodenbereich anschließende, quer zu der jeweiligen Schlüsselflächenebene verlaufende Seitenwandbereiche bestimmt ist.

Dabei ist es beispielsweise denkbar, dass die Ausnehmungen so ausgebildet sind, dass sie eine Querschnittsform aufweisen, welche durch einen konkav gewölbten und die Seitenwandbereiche verbindenden Bodenbereich bestimmt ist.

Hinsichtlich der Variation der Querschnittsform der Ausnehmung wurden bislang keine näheren Angaben gemacht.

So ist vorgesehen, dass die Ausnehmung eine mit der Erstreckung in einer Richtung parallel zur Mittelachse konstante oder variierende Querschnittsform aufweist.

Insbesondere ist es beispielsweise denkbar, das ein Abstand des Bodenbereichs von einer Mittelachse des Innengewindes über die Erstreckung der Ausnehmung in Richtung der Mittelachse im Wesentlichen konstant ist.

Alternativ dazu ist es aber auch denkbar, dass der Bodenbereich mit der Erstreckung in Richtung der Mittelachse einen variierenden Abstand von der Mittelachse aufweist.

Beispielsweise ist vorgesehen, dass die Ausnehmung mit einem schräg zur Mittelachse verlaufenden Bodenbereich versehen ist, der beispielsweise bis zur jeweiligen Schlüsselflächenebene verläuft.

Ergänzend zu den vorstehend beschriebenen Merkmalen der erfindungsgemäßen Lösung wird die eingangs genannte Aufgabe auch durch eine Mutter der eingangs beschriebenen Art erfindungsgemäß dadurch gelöst, dass das Innengewinde zur Ausbildung der Mutter als Sicherungsmutter als einem Normverlauf entsprechendes Innengewinde hergestellt, jedoch durch plastische Deformation des Mutternkörpers von dem Normverlauf abweichend ausgebildet ist.

Der Vorteil der erfindungsgemäßen Lösung ist darin zu sehen, dass allein durch plastische Deformation des Mutternkörpers die Möglichkeit besteht, eine Sicherungsmutter herzustellen, die somit optimale mechanische Eigenschaften bei möglichst geringem Gewicht aufweist, da keine zusätzlichen Elemente am Mutternkörper vorgesehen sind, die für das Erreichen des für eine Sicherungsmutter erforderlichen Klemmdrehmoments üblicherweise notwendig sind.

Somit hat die erfindungsgemäße Mutter ebenfalls verbesserte oder optimierte mechanische Eigenschaften bei möglichst geringem Gewicht.

Das für die erfindungsgemäße Funktion als Sicherungsmutter erforderliche definierte Klemmdrehmoment lässt sich insbesondere dadurch erreichen, dass das Innengewinde aufgrund der Deformation des Mutternkörpers von einem Normverlauf abweichende variierende radiale Abstände von der Mittelachse und/oder von einem Normverlauf abweichende Abstandsverläufe oder Gewindegänge aufweist, so dass ein Einschrauben eines Gewindebolzens oder einer Schraube den plastisch deformierten Mutternkörper wieder elastoplastisch in Richtung der Normmaße deformiert, wodurch das Klemmdrehmoment entsteht.

Im einfachsten Fall ist dabei vorgesehen, dass das Innengewinde aufgrund der plastischen Deformation des Mutternkörpers bezüglich der Mittelachse unrund ausgebildet ist.

Eine andere vorteilhafte Lösung sieht vor, dass das Innengewinde bezüglich der Mittelachse in gleichen Winkelabständen angeordnete deformierte Gewindebereiche aufweist, deren Abstand von der Mittelachse bezogen auf einen Normverlauf reduziert ist, das heißt, dass deren Abstand geringer ist als bei einer normgemäßen Ausbildung.

Im einfachsten Fall handelt es sich um ein Paar einander gegenüberliegend deformierter Gewindebereiche, deren Abstand von der Mittelachse reduziert ist.

Bei einer weiteren vorteilhaften Ausführungsform lässt sich, das für die erfindungsgemäße Sicherungsmutter erforderlich definierte Klemmdrehmoment zweckmäßigerweise dadurch erreichen, dass das Innengewinde mehrere mit zweizähliger oder mehrzähliger Symmetrie bezüglich der Mittelachse angeordnete deformierte Gewindebereiche aufweist, deren Abstand bezogen auf einen Normverlauf reduziert ist.

Beispielsweise sind mehrere einander paarweise bezüglich der Mittelachse gegenüberliegende deformierte Gewindebereiche aufweist, deren Abstand gegenüber dem Normmaß reduziert ist oder beispielsweise drei oder mehrere gleichmäßig an Umfang verteilte deformierte Gewindebereiche vorgesehen, deren Abstand bezogen auf einen Normverlauf reduziert ist.

Eine besonders zweckmäßige Ausbildung der erfindungsgemäßen Mutter sieht vor, dass der Mutternkörper durch Krafteinwirkung auf einander bezüglich der Mittelachse gegenüberliegende Kantenbereiche plastisch deformiert ist.

Alternativ dazu sieht eine andere Lösung vor, dass der Mutternkörper durch Krafteinwirkung auf einander bezüglich der Mittelachse gegenüberliegende Bodenbereiche und/oder Seitenwandbereiche von Ausnehmungen plastisch deformiert ist.

Besonders günstig ist es dabei, wenn die Krafteinwirkung in einem oberen Bereich des Mehrkantabschnitts erfolgt, da der Mutternkörper vorzugsweise in den oberen Bereich mit geringeren Kräften plastisch deformierbar ist, als im Bereich einer Druckseite desselben.

Eine weitere alternative Lösung sieht vor, dass der Mutternkörper durch Krafteinwirkung im Bereich einer Außenkante der zweiten Stirnseite plastisch deformiert ist.

Insbesondere sieht eine Lösung vor, dass das Innengewinde deformierte Gewindebereiche mit einem von einem Normverlauf abweichenden Verlauf aufweist, wobei beispielsweise deren Steigungsverlauf bezogen auf eine Normsteigung verändert ist, das heißt, dass beispielsweise ein Abstand der Gewindegänge voneinander größer oder kleiner ist, als bei einer normgemäßen Abbildung.

Wiederum sieht eine weitere vorteilhafte Lösung vor, dass der Mutternkörper durch Krafteinwirkung auf eine der Stirnseiten, insbesondere die zweite Stirnseiten, mit einer Komponente in Richtung parallel zur Mittelachse plastisch deformiert ist.

In den Fällen, in welchen auf eine Außenkante der zweiten Stirnseite eine Krafteinwirkung erfolgt oder auf die zweite Stirnseite unmittelbar eine Krafteinwirkung erfolgt, wird vorzugsweise ein sich unmittelbar an die zweite Stirnseite anschließender Gewindegang abweichend von Normverlauf plastisch deformiert, um das erforderliche Klemmdrehmoment zu erreichen.

Hinsichtlich der Art der Einwirkung der Deformationskräfte wurden bislang keine näheren Angaben gemacht.

So sieht eine vorteilhafte Lösung vor, dass der Mutternkörper durch punktförmig einwirkende Deformationskräfte plastisch deformiert ist.

Alternativ oder ergänzend dazu sieht eine weitere Lösung vor, dass der Mutternkörper durch linienförmig einwirkende Deformationskräfte plastisch deformiert ist.

Alternativ oder ergänzend sieht eine weitere zweckmäßige Lösung vor, dass der Mutternkörper durch flächenförmig einwirkende Deformationskräfte plastisch deformiert ist.

Hinsichtlich des Umfangs der Deformation des Mutternkörpers wurden bislang keine näheren Angaben gemacht.

So sieht eine vorteilhafte Lösung vor, dass der Mutternkörper vorrangig global deformiert ist.

Unter dem Begriff global deformiert ist dabei zu verstehen, dass insgesamt der Mutternkörper, vorzugsweise der Mehrkantabschnitt des Mutternkörpers, eine Form hat, die relativ zu einer Form bei normgerechter Herstellung von den Normverläufen abweicht.

Das heißt, dass der Mutternkörper und insbesondere der Mehrkantabschnitt desselben insgesamt deformiert sind.

Alternativ oder ergänzend ist es aber auch ebenfalls möglich, dass der Mutternkörper vorrangig lokal deformiert ist.

Unter einer vorrangig lokalen Deformation ist dabei zu verstehen, dass sich diese nur lokal, also in dem Bereich des Mutternkörpers, in dem diese eingebracht wird, auswirkt und somit sich nicht derart auswirkt, dass der Mutternkörper selbst oder der Mehrkantabschnitt desselben ihre Grundform signifikant verändern.

Hinsichtlich des Materials, aus dem der Mutternkörper hergestellt wurde, wurden im Zusammenhang mit der bisherigen Erläuterung der erfindungsgemäßen Lösungen keine näheren Angaben gemacht.

Eine Mutter mit mindestens einem der vorstehend erläuterten Merkmalen kann aus Metal, beispielsweise Stahl, Keramik, Glas, Polymer, Verbundwerkstoff oder einem "Smart Material" hergestellt sein.

Insbesondere wird alternativ oder ergänzend zu den Merkmalen der bislang beschriebenen Ausführungsbeispiele und Versionen die eingangs genannte Aufgabe erfindungsgemäß auch dadurch gelöst, dass der Mutternkörper aus Stahl mit einem bainitischen oder ferritisch-perlitischen Gefüge hergestellt ist.

Ein Stahl mit einem derartigen Gefüge erlaubt es, den Muttern möglichst optimale mechanische Eigenschaften bei möglichst geringem Gewicht zu verleihen, und insbesondere erlaubt ein derartiges Gefüge eine besonders kostengünstige Herstellung einer derartigen Mutter.

So sieht eine zweckmäßige Lösung vor, dass das bainitische oder ferritisch-perlitische Gefüge ein Kohlenstoffgehalt von 0,25 Gew% oder mehr aufweist.

Ein derartiger Kohlenstoffgehalt hat sich für ein Gefüge einer Mutter mit optimalen mechanischen Eigenschaften als zweckmäßig erwiesen.

Die Festigkeitseigenschaften eines derartigen bainitischen oder ferritisch-perlitischen Gefüge lassen sich erfindungsgemäß dadurch steigern, dass das bainitische oder ferritisch-perlitische Gefüge durch Ausscheidungen von Mikrolegierungselementen gesteigerte Festigkeitseigenschaften aufweist.

Dabei sind die Anteile derartiger Mikrolegierungselemente sehr gering.

So sieht eine vorteilhafte Lösung vor, dass das bainitische oder ferritisch-perlitische Gefüge mindestens 0,05 Gew% Mikrolegierungselemente aufweist.

Eine besonders zweckmäßige Lösung sieht vor, dass das bainitische oder ferritisch-perlitische Gefüge mindestens 0,1 Gew% Mikrolegierungselemente aufweist.

In diesem Zusammenhang wurden keine näheren Angaben über derartige Mikrolegierungselemente gemacht.

Derartige Mikrolegierungselemente sind beispielsweise Nb, Va, Ti.

Eine andere vorteilhafte Lösung sieht vor, dass das bainitische oder ferritischperlitische Gefüge durch thermomechanische Vorbehandlung gesteigerte Festigkeitseigenschaften aufweist.

Dies sind thermomechanische Vorbehandlungsschritte, die aus dem Stand der Technik bekannt sind.

Weiterhin sieht eine vorteilhafte Lösung vor, dass das bainitische oder ferritisch-perlitische Gefüge eine Mischkristallverfestigung durch beispielsweise Silizium und/oder Mangan aufweist.

Ferner ist es möglich, die gewünschte Formfestigkeit des Mutternkörpers, insbesondere im Bereich des Gewindeträgermantels durch eine nachgeschalte Wärmebehandlung zu erreichen.

Besonders vorteilhaft ist es jedoch, wenn die gewünschte Formfestigkeit des Gewindeträgermantels durch Kaltumformung von bainitischen oder ferritischperlitischen Gefügen und bereichsweiser Erzeugung von hohen Versetzungsdichten ohne nachgeschaltete Wärmebehandlung erreichbar ist, da dieses Verfahren erhebliche Einsparungen bei den Herstellungskosten ermöglicht. Eine zweckmäßige Ausführungsform einer Mutter sieht vor, dass das bainitische oder ferritisch-perlitische Gefüge durch Steuerung der Gefügewandlung und durch Umformung eine Härte im Bereich von 100 bis 370 HV, noch besser 110 bis 360 HV für Regelgewinde und eine Härte im Bereich von 170 bis 370 HV, noch besser 180 bis 360 HV für Feingewinde im Gewindeträgermantel ohne dass eine thermische Nachbehandlung erforderlich ist.

Weitere Merkmale und Vorteile sind Gegenstand der nachfolgenden Beschreibung sowie der zeichnerischen Darstellung einiger Ausführungsbeispiele, welche insoweit unter den Anspruchswortlaut fallen wie nachstehend im Einzelnen erläutert wird.

In der Zeichnung zeigen:
- Fig. 1: eine perspektivische Darstellung eines ersten Ausführungsbeispiels einer Mutter;
- Fig. 2: eine Draufsicht auf die Mutter in Richtung des Pfeils A in Fig. 1;
- Fig. 3: einen Schnitt längs Linie 3-3 in Fig. 2;
- Fig. 4: eine Darstellung ähnlich Fig. 1 eines zweiten Ausführungsbeispiels einer Mutter;
- Fig. 5: eine Darstellung ähnlich Fig. 2 des zweiten Ausführungsbeispiels der Mutter;
- Fig. 6: eine Darstellung ähnlich Fig. 3 des zweiten Ausführungsbeispiels der Mutter;
- Fig. 7: eine Darstellung ähnlich Fig. 1 eines dritten Ausführungsbeispiels einer Mutter;
- Fig. 8: eine Darstellung ähnlich Fig. 2 des dritten Ausführungsbeispiels der Mutter;
- Fig. 9: eine Darstellung ähnlich Fig.3 des dritten Ausführungsbeispiels der Mutter;
- Fig. 10: eine Darstellung ähnlich Fig. 1 eines vierten Ausführungsbeispiels einer Mutter;
- Fig. 11: eine Darstellung ähnlich Fig. 2 des vierten Ausführungsbeispiels der Mutter;
- Fig. 12: eine Darstellung ähnlich Fig. 3 des vierten Ausführungsbeispiels der Mutter;
- Fig. 13: eine Darstellung ähnlich Fig. 1 eines fünften Ausführungsbeispiels einer Mutter;
- Fig. 14: eine Darstellung ähnlich Fig. 2 des fünften Ausführungsbeispiels der Mutter;
- Fig. 15: eine Darstellung ähnlich Fig. 3 des fünften Ausführungsbeispiels der Mutter;
- Fig. 16: eine Darstellung ähnlich Fig. 1 eines sechsten Ausführungsbeispiels einer Mutter;
- Fig. 17: eine Darstellung ähnlich Fig. 2 des sechsten Ausführungsbeispiels einer Mutter;
- Fig. 18: eine Darstellung ähnlich Fig. 3 des sechsten Ausführungsbeispiels einer Mutter;
- Fig. 19: eine Darstellung ähnlich Fig. 1 eines siebten Ausführungsbeispiels einer Mutter;
- Fig. 20: eine Darstellung ähnlich Fig. 2 des siebten Ausführungsbeispiels der Mutter;
- Fig. 21: eine Darstellung ähnlich Fig. 3 des siebten Ausführungsbeispiels der Mutter;
- Fig. 22: eine Darstellung ähnlich Fig. 1 eines achten Ausführungsbeispiels einer Mutter;
- Fig. 23: eine Darstellung ähnlich Fig. 2 des achten Ausführungsbeispiels der Mutter;
- Fig. 24: eine Darstellung ähnlich Fig. 3 des achten Ausführungsbeispiels der Mutter;
- Fig. 25: eine Darstellung ähnlich Fig. 11 des vierten Ausführungsbeispiels einer Mutter, ausgebildet als erste Version einer Sicherungsmutter;
- Fig. 26: eine Darstellung ähnlich Fig. 12 der ersten Version einer Sicherungsmutter;
- Fig. 27: eine Darstellung ähnlich Fig. 25 einer zweiten Version einer Sicherungsmutter;
- Fig. 28: eine Darstellung ähnlich Fig. 26 der zweiten Version der Sicherungsmutter;
- Fig. 29: eine Darstellung ähnlich Fig. 25 einer dritten Version einer Sicherungsmutter;
- Fig. 30: eine Darstellung ähnlich Fig. 26 der dritten Version einer Sicherungsmutter;
- Fig. 31: eine Darstellung ähnlich Fig. 25 einer vierten Version einer Sicherungsmutter;
- Fig. 32: eine Darstellung ähnlich Fig. 26 der vierten Version einer Sicherungsmutter;
- Fig. 33: eine Darstellung ähnlich Fig. 25 einer fünften Version einer Sicherungsmutter;
- Fig. 34: eine Darstellung ähnlich Fig. 26 der fünften Version der Sicherungsmutter;
- Fig. 35: eine Darstellung ähnlich Fig. 25 einer sechsten Version einer Sicherungsmutter;
- Fig. 36: eine Darstellung ähnlich Fig. 26 der sechsten Version der Sicherungsmutter;
- Fig. 37: eine Darstellung ähnlich Fig. 25 einer siebten Version der Sicherungsmutter und
- Fig. 38: eine Darstellung ähnlich Fig. 26 der siebten Version der Sicherungsmutter;
- Anlage 1: eine Zusammenstellung von Stählen mit einem ausscheidungshärtenden ferritisch-perlitischen Gefüge und
- Anlage 2: eine Zusammenstellung von Eigenschaften und Zusammensetzungen eines Stahls aus einem ausscheidungshärtenden ferritisch-perlitischen Gefüge mit guten Kaltumformeigenschaften.

Die in den Figuren dargestellte Ausbildung von Ausnehmungen 60 entspricht nicht gänzlich der Ausbildung der Ausnehmungen 60 gemäß den Ansprüchen.

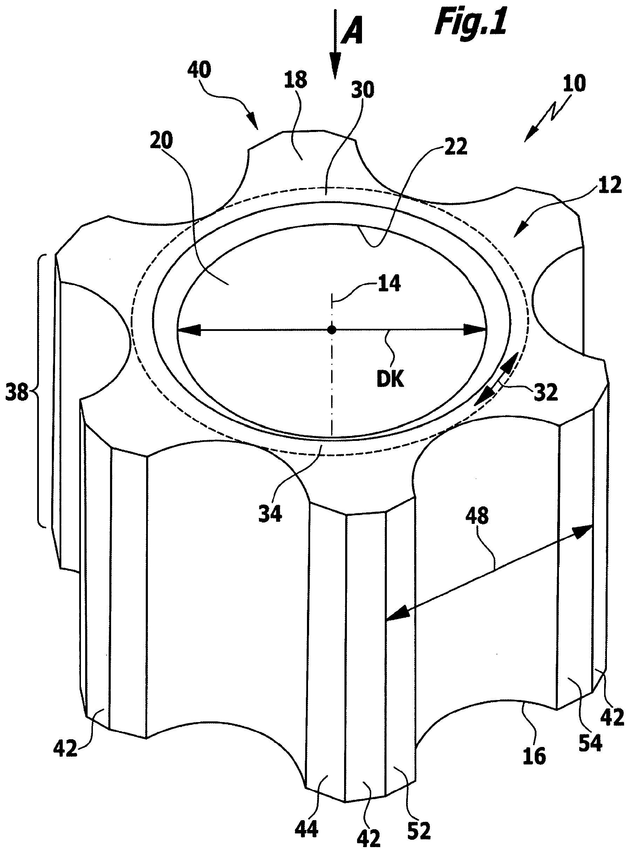

Ein in Fig. 1 bis 3 dargestelltes erstes Ausführungsbeispiel einer als Ganzes mit 10 bezeichneten Mutter umfasst einen Mutternkörper 12, welcher sich längs einer Mittelachse 14 zwischen einer ersten Stirnseite 16 und einer zweiten Stirnseite 18 erstreckt.

Dieses erste Ausführungsbeispiel weist den Druckflansch und in der in den Fig. 1 bis 3 dargestellten Variante die mit zunehmender Erstreckung von der zweiten Stirnseite zur Druckseite zunehmende radiale Mindestdicke des Gewindeträgermantels gemäß der beanspruchten Lösung nicht auf und fällt insoweit nicht unter den Wortlaut der Ansprüche.

Der Mutternkörper 12 wird von einer sich parallel zur Mittelachse 14 von der ersten Stirnseite 16 bis zur zweiten Stirnseite 18 erstreckenden Gewindebohrung 20 durchsetzt, welche ein Innengewinde 22 mit Gewindegängen 24 aufweist, welche sich von einem durch eine Innenkontur der Gewindegänge 24 vorgegebenen Kernlochdurchmesser DK bis zu einem durch eine Außenkontur der Gewindegänge 24 vorgegebenen Nenndurchmesser oder Außendurchmesser DA in den Mutternkörper 12 hinein erstrecken, und welche von einem die Gewindegänge 24 umschließenden Gewindeträgermantel 30, der Teil des Mutternkörpers 12 ist, getragen werden.

Der zylindrische und einen integralen Bestandteil des Mutternkörpers 12 darstellende Gewindeträgermantel 30 verleiht den Gewindegängen 24 die notwendige Stabilität gegen ein Ausweichen derselben in radialer und/oder in axialer Richtung zur Mittelachse 14 durch seine in einer um die Mittelachse 14 umlaufenden Umfangsrichtung 32 geschlossene Wand 34, wobei die Wand 34 des Gewindeträgermantels 30 ausgehend vom Außendurchmesser DA in radialer Richtung zur Mittelachse 14 eine Dicke DG aufweist, welche mindestens dem 0,05-fachen des Außendurchmessers DA des Innengewindes 22 entspricht, um die Gewindegänge 24 bei einer Belastung durch einen mit einem korrespondierenden Außengewinde 35 in die Gewindegänge 24 eingeschraubten Gewindebolzen 36 gegen eine Bewegung in radialer und/oder axialer Richtung zur Mittelachse 14 zu stabilisieren wobei anspruchsgemäß und in Abweichung zu der in den Fig. 1 bis 3 dargestellten Variante vorgesehen ist, dass der Gewindeträgermantel 30 mit zunehmender Erstreckung von der zweiten Stirnseite 18 zur Druckseite 16 eine zunehmende radiale Mindestdicke DG aufweist.

Der Mutternkörper 12 ist in einem Mehrkantabschnitt 38, der sich bei dem ersten Ausführungsbeispiel von der ersten Stirnseite 16 bis zur zweiten Stirnseite 18 erstreckt, mit einer Mehrkantaußenkontur 40 versehen, welche durch Kantenbereiche 42 und zwischen den Kantenbereichen 42 liegenden Schlüsselflächen 44 definiert ist, wobei einander bezüglich der Mittelachse 14 gegenüberliegende Schlüsselflächen 44 parallel zueinander verlaufen und in einem Abstand verlaufen, der durch eine für die Mutter 10 übliche Norm, beispielsweise DIN EN 1661, 1663, 1664, 1667, DIN EN ISO 4032 - 4036, DIN EN ISO 8673 - 8675, DIN EN ISO 7040 - 7042, DIN EN ISO 7719, DIN EN ISO 10511 - 10513 sowie DIN EN ISO 4759 - 1, definiert ist, so dass die Außenkontur 40 jeweils eine geradzahlige Anzahl von Schlüsselflächen 44 aufweist, die paarweise parallel zueinander verlaufen, wobei die Kantenbereiche 42 jeweils einen Übergang zwischen in Umlaufrichtung 32 aufeinanderfolgenden Schlüsselflächen 44 darstellen.

Bei der dargestellten Mutter 10 ist die Mehrkantaußenkontur 40 als Sechskant mit einer Querschnittsform eines regelmäßigen Sechsecks gemäß "Tabellenbuch Metall", 44. Auflage, Verlag Europa Lehrmittel, Seite 59, ausgebildet, so dass sechs Kantenbereiche 42 und sechs Schlüsselflächen 44 zwischen den jeweils aufeinanderfolgende Kantenbereichen 42 in den Schlüsselflächenebenen 46 liegen, wobei die Schlüsselflächenebenen 46 jeweils parallel zur Mittelachse 14 verlaufen und so ausgerichtet sind, dass jeweils einander gegenüberliegende Schlüsselflächenebenen 46 parallel zur zwischen diesen liegenden Mittelachse 14 und parallel zueinander verlaufen.

Bei dem Mutternkörper 12 gemäß dem ersten Ausführungsbeispiel erstrecken sich die Schlüsselflächen 44 in einer in der jeweiligen Schlüsselflächenebene 46 liegenden Querrichtung 48 zwischen den aufeinanderfolgenden Kantenbereichen 42 nicht zusammenhängend und geschlossen in den Schlüsselflächenebenen 46 sondern die Schlüsselflächen 44 werden durch Schlüsselflächenbereiche 52 und 54, die in den Schlüsselflächenebenen 46 liegen, gebildet, wobei sich vorzugsweise die Schlüsselflächenbereiche 52 und 54 jeweils im Anschluss an einen der Kantenbereiche 42 in Richtung des jeweils anderen Kantenbereichs 42 erstrecken, jedoch nicht ineinander übergehen.

Vielmehr liegt zwischen den Schlüsselflächenbereichen 52 und 54 eine sich ausgehend von der jeweiligen Schlüsselflächenebene 46 in den Mutternkörper 12 hinein in Richtung der Mittelachse 14 erstreckende Ausnehmung 60, welche sich an die Schlüsselflächenbereiche 52 und 54 anschließende, quer zu diesen verlaufende Seitenwandbereiche 62 und 64 sowie einen die Seitenwandbereiche 62 und 64 verbindenden Bodenbereich 66 aufweist, der konkav gewölbt ausgebildet ist und so weit in den Mutternkörper 12 hineinragt, dass dieser den Gewindeträgermantel 30 berührt.

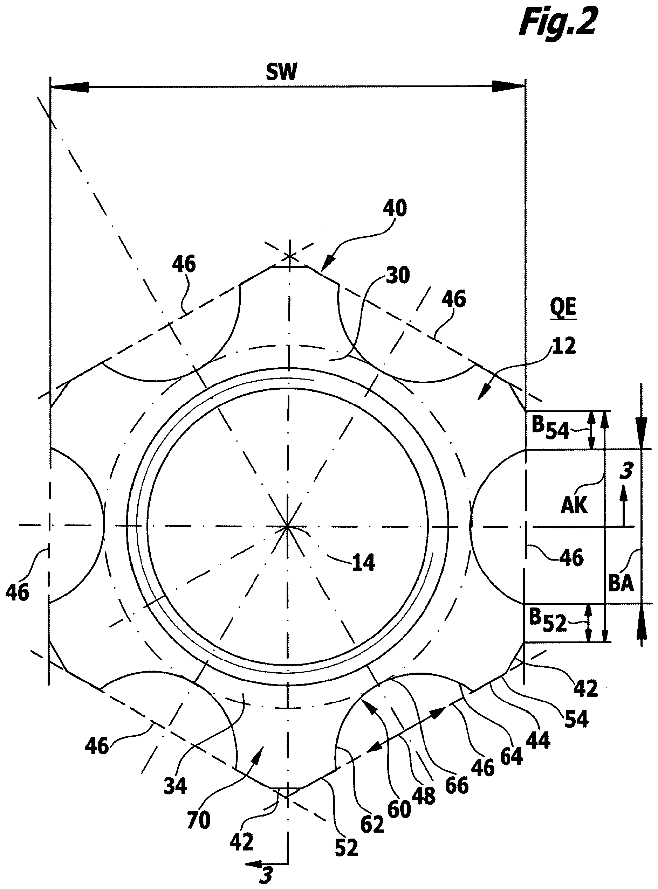

Vorzugsweise ist der Bodenbereich 66 dabei derart konkav gewölbt, dass er in die ebenfalls konkav gewölbten Seitenwandbereiche 62 und 64 übergeht, so dass die Ausnehmung 60 in einer senkrecht zur Mittelachse 14 verlaufenden, in Fig. 2 der Zwischenebene entsprechende Querschnittsebene QE eine U-förmige Querschnittsform, vorzugsweise sogar eine einem Kreisbogensegment angenäherte Querschnittsform aufweist.

Bei dem Mutternkörper 12 werden die Kantenbereiche 42, die Schlüsselflächenbereiche 52 und 54 sowie die Seitenwandbereiche 62 und 64 und zum Teil der Bodenbereich 66 von Außenkonturträgern 70 des Mutternkörpers 12 getragen, die ebenfalls einen integralen Bestandteil des Mutternkörpers 12 darstellen und daher auch einstückig an den Gewindeträgermantel 30 angeformt sind und sich ausgehend von dem Gewindeträgermantel 30 jeweils radial zur Mittelachse 14 nach außen erstrecken und die dabei vorstehend genannten Flächen tragen.

Ausgehend von den Kantenbereichen 42 erstrecken sich die die Schlüsselfläche 44 bildenden Schlüsselflächenbereiche 52 und 54 in der jeweiligen senkrecht zur Mittelachse 14 verlaufenden Querschnittsebene QE, beispielsweise der Zeichnungsebene in Fig. 2, über eine Breite B52 und eine Breite B54 in einer Querrichtung 48, die zusammen mindestens 10% eines Abstandes AK benachbarter Kantenbereiche 42 betragen, so dass umgekehrt die Ausnehmung 60 eine in der senkrecht zur Mittelachse 14 verlaufenden Querschnittsebene QE eine Breite BA aufweist, die maximal 90% des Abstands AK der aufeinanderfolgenden Kantenbereiche 42 beträgt.

Die nur durch die Schlüsselflächenbereiche 52 und 54 sowie die Kantenbereiche 42 definierte und in diesen Bereichen normgerecht ausgebildete Außenkontur 40 ist bei dem ersten Ausführungsbeispiel im Bereich des Mehrkantabschnitts 38 des Mutternkörpers 12 in jeder senkrecht zur Mittelachse 14 verlaufenden Querschnittsebene QE identisch, so dass an dem Mehrkantabschnitt 38 übliche für einen derartigen normgerechten Mehrkant vorgesehene Werkzeuge mit der jeweiligen Schlüsselweite SW angreifen können, um die Mutter 10 mit dem Innengewinde 22 auf einen Gewindebolzen aufschrauben und festschrauben zu können.

Bei dem in Fig. 1 dargestellten Ausführungsbeispiel einer Mutter 10 erstreckt sich der Mutternkörper 12 nicht über den Mehrkantabschnitt 38 hinaus, das heißt, der Mutternkörper 12 wird lediglich durch den Mehrkantabschnitt 38 gebildet, so dass beispielsweise die Stirnseite 16 eine Druckfläche 82 darstellt, mit welcher ein festzuschraubendes Element oder ein festzuschraubender Körper zu beaufschlagen ist.

Ferner ist die Querschnittsform des Mutternkörpers 12 im gesamten Mehrkantabschnitt 38 in jeder senkrecht zur Mittelachse 14 verlaufenden Querschnittsebene QE identisch, so dass dieser über die gesamte Erstreckung des Mutternkörpers zwischen der ersten Stirnseite 16 und der zweiten Stirnseite 18 die identische Querschnittsform aufweist.

Somit ist bei dem ersten Ausführungsbeispiel insgesamt der Mutternkörper 12 so ausgebildet, dass dieser bis auf den Verlauf des Innengewindes 22 eine sechszählige Rotationssymmetrie um die Mittelachse 14 aufweist.

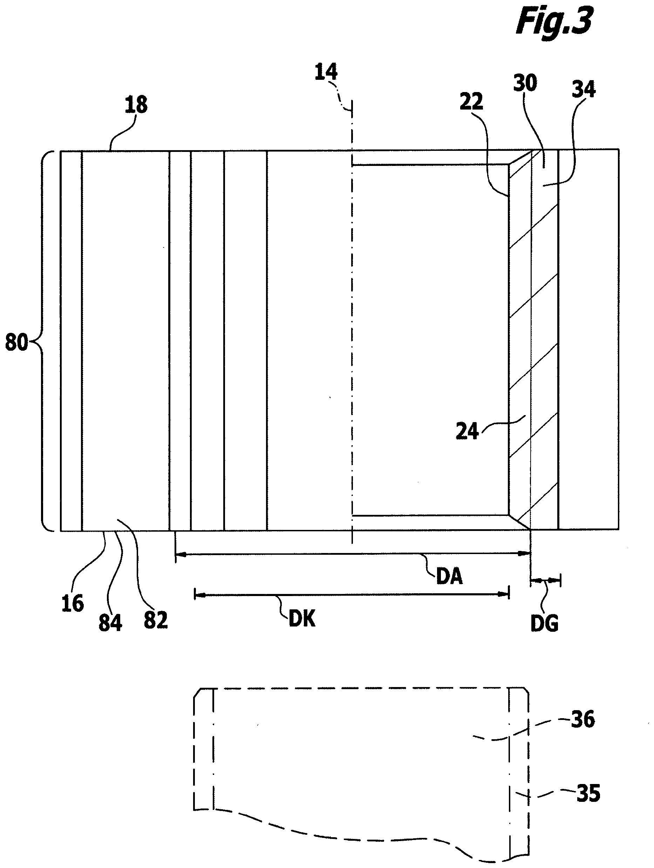

Wird dabei von der Druckseite 82 mit einer Druckfläche 84 ein Element beaufschlagt, so sind die im Gewindeträgermantel 30 nahe der Druckseite 82 in Umfangsrichtung 32 wirkenden Kräfte, die im Sinne einer Aufweitung des Gewindeträgermantels 30 wirken, maximal und nehmen mit zunehmendem Abstand von der Druckseite 82 ab, so dass der Gewindeträgermantel 30 insgesamt so zu dimensionieren ist, dass die radiale Dicke DG von dessen Wand 34 ausreichend ist, um das bei der vorgesehenen Belastung des Mutternkörpers 12 im Anschluss an die Druckseite 82 wirkende Belastungskollektiv von Kräften und Momenten aufzunehmen (Fig. 3).

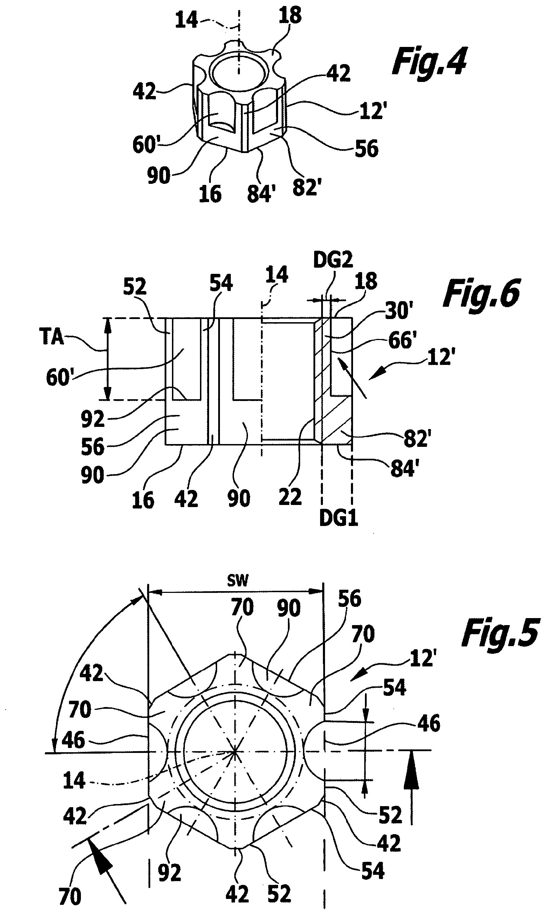

Bei einem zweiten Ausführungsbeispiel, welches beispielhaft dargestellt ist in Fig. 4 bis 6, ist der anspruchsgemäße Druckflansch nicht vorgesehen, sodass dieses Ausführungsbeispiel insoweit nicht unter den Wortlaut der Ansprüche fällt.

Bei diesem zweiten Ausführungsbeispiel, dargestellt in den Fig. 4 bis 6, erstreckt sich der Mehrkantabschnitt 38 ebenfalls über den gesamten Mutternkörper 12' von der ersten Stirnseite 16 zur zweiten Stirnseite 18 längs der Mittelachse 14, allerdings erstreckt sich die Ausnehmung 60' von der zweiten Stirnseite 18 nicht bis zur ersten Stirnseite 16, sondern bis zu einem einen integralen Bestandteil des Mutternkörpers 12' darstellenden Druckboden 90 im Bereich der Druckseite 82', der sich zwischen aufeinanderfolgenden Kantenbereichen 42 radial zur Mittelachse 14 bis zu den Schlüsselflächenebenen 46 erstreckt, so dass sich im Bereich des Druckbodens 90 ein Schlüsselflächenbereich 56 ausbildet, der sich in der Querrichtung 48 durchgehend zwischen den Kantenbereichen 42 erstreckt.

Bei dem zweiten Ausführungsbeispiel verläuft die Ausnehmung 60' von der zweiten Stirnseite 18 in Richtung der ersten Stirnseite 16 somit nur bis zum Druckboden 90 und somit über einen Teilabschnitt TA der Erstreckung des Mutternkörpers 12' in Richtung der Mittelachse 14 und endet mit einer Abschlusswand 92, die parallel zu einer senkrecht zur Mittelachse 14 verlaufenden Querschnittsebene QE ausgerichtet ist und eine Druckfläche 84' gegenüberliegende Oberseite des Druckbodens 90 darstellt.

Dadurch, dass der Druckboden 90 beim zweiten Ausführungsbeispiel sich im Bereich der Druckseite 82' radial weiter nach außen erstreckt, ist im Bereich der ersten Stirnseite 16 die radiale Dicke DG 1 des Gewindeträgermantels 30 größer als im Bereich der zweiten Stirnseite, in dem die radiale Dicke DG 2 des Gewindeträgermantels 30 durch den Bodenbereich 66' der Ausnehmung 60' begrenzt ist.

Damit hat der Gewindeträgermantel 30' im Bereich der Druckseite 82' eine größere radiale Dicke DG1 und verleiht somit dem Innengewinde 22 im Bereich der Druckseite 82' eine größere Stabilität gegen eine radiale und/oder axiale Aufweitung desselben.

Durch den Druckboden 90 erfolgt somit im Bereich der Druckseite 82' eine zusätzliche Versteifung des Gewindeträgermantels 30 gegen eine Aufweitung in der Umfangsrichtung 32.

Darüber hinaus erfolgt durch den Druckboden 90 auch eine Versteifung der Außenkonturträger 70 relativ zueinander, so dass dadurch insgesamt der Mutternkörper 12' in der Lage ist, größere Belastungen aufzunehmen.

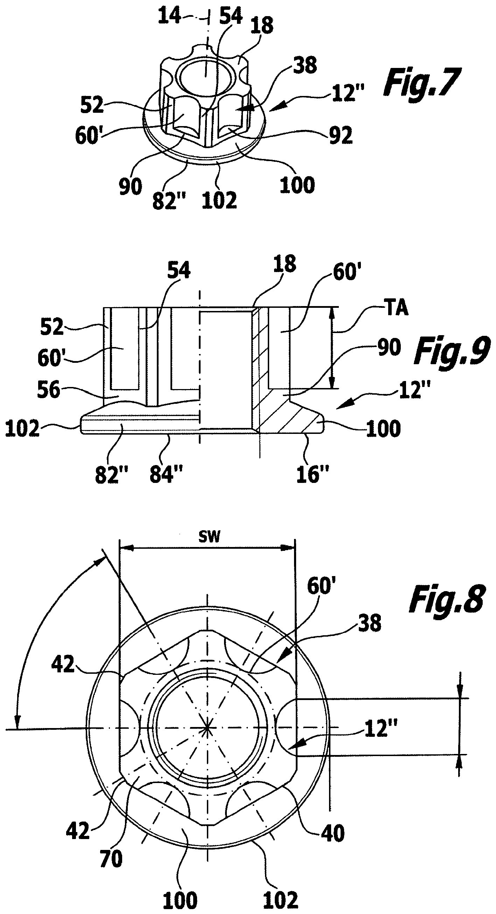

Bei einem dritten Ausführungsbeispiel, dargestellt in den Fig. 7 bis 9 sind ebenfalls diejenigen Teile, die mit denen des ersten Ausführungsbeispiels identisch sind, mit denselben Bezugszeichen versehen, so dass vollinhaltlich auf die Ausführungen zu den vorherigen Ausführungsbeispielen Bezug genommen werden kann.

Bei dem dritten Ausführungsbeispiel erstrecken sich die Ausnehmungen nicht bis zu dem an der Druckseite vorgesehenen Druckflansch, sodass insoweit dieses Ausführungsbeispiel nicht unter den Wortlaut der Ansprüche fällt.

Im Gegensatz zum zweiten Ausführungsbeispiel ist beim dritten Ausführungsbeispiel im Bereich des Druckbodens 90 noch ein radial über den Mehrkantkörper 38 überstehender Druckflansch 100 vorgesehen, welcher bezogen auf die Mittelachse 14 eine kreisrunde Außenkontur 102 aufweist, so dass im Bereich der Druckseite 82" des Mutternkörpers eine vergrößerte Druckfläche 84" vorliegt, die eine Querschnittsfläche des Mehrkantabschnitts 38, der sich bei diesem Ausführungsbeispiel über dem Druckflansch 100 in Richtung parallel zur Mittelachse 14 erhebt, radial überragt. Der Mehrkantabschnitt 38 ist in gleicher Weise ausgebildet wie beim zweiten Ausführungsbeispiel, da sich die Ausnehmung 60' in gleicher Weise wie beim zweiten Ausführungsbeispiel ausgehend von der zweiten Stirnseite 18 in Richtung der ersten Stirnseite 16" nur bis zum Druckboden 90 erstreckt und im Bereich des Druckbodens 90 mit der Abschlusswand 92 endet.

Dabei verläuft die Abschlusswand 92 in gleicher Weise, wie beim zweiten Ausführungsbeispiel beschrieben, parallel zu den senkrecht zur Mittelachse 14 verlaufenden Querschnittsebenen QE.

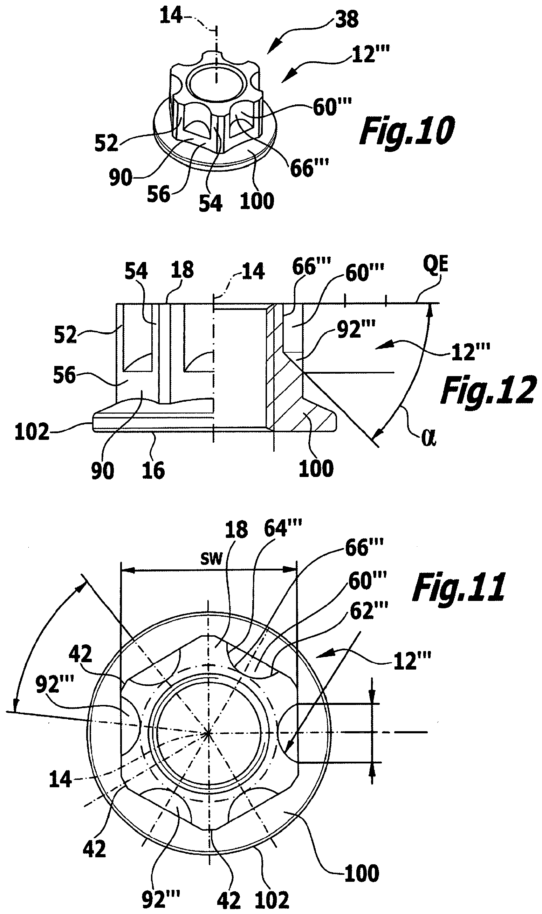

Bei einem vierten Ausführungsbeispiel, welches beispielhaft in den Fig. 10, 11 und 12 dargestellt ist, erstrecken sich die Ausnehmungen nicht bis zu dem an der Druckseite vorgesehenen Druckflansch, sodass dieses Ausführungsbeispiel insoweit nicht unter den Wortlaut der Ansprüche fällt.

Bei diesem vierten Ausführungsbeispiel ist der Mutternkörper 12"' insoweit, als dieselben Bezugszeichen Verwendung finden, identisch ausgebildet, wie bei den voranstehenden Ausführungsbeispielen, so dass auf die Ausführungen hierzu vollinhaltlich verwiesen werden kann.

Insbesondere umfasst der Mutternkörper 12‴ den Mehrkantabschnitt 38, mit dem Druckboden 90 und dem Druckflansch 100 gemäß dem dritten Ausführungsbeispiel.

Im Gegensatz zum dritten Ausführungsbeispiel verläuft allerdings die Abschlusswand 92‴ der Ausnehmung 60‴ nicht parallel zu einer Querschnittsebene QE, sondern in einem Winkel a zu dieser und ist somit ausgehend vom Bodenbereich 66‴ der Ausnehmung 60‴ mit zunehmender radialer Erstreckung bezüglich der Mittelachse 14 nach außen geneigt, so dass die Abschlusswand 92‴ radial nach außen zum Druckflansch 100 hin abfällt.

Bei den Darstellungen der Fig. 10 und 12 liegt die Abschlusswand 92‴ beabstandet von dem Druckflansch 100 abweichend von der beanspruchten Lösung. Anspruchsgemäß muss die Abschlusswand so zum Druckflansch abfallen, dass sich die Ausnehmung bis zu dem an der Druckseite vorgesehenen Druckflansch erstreckt.

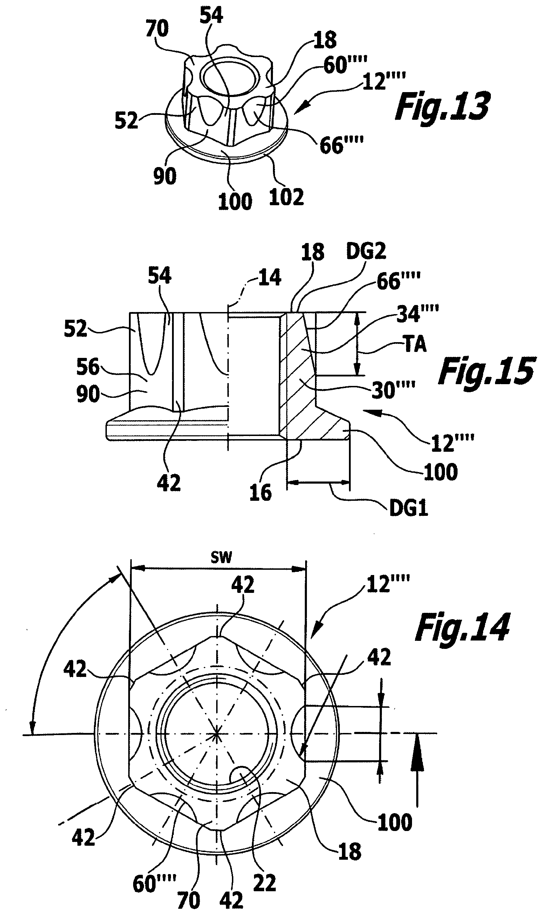

Bei einem fünften Ausführungsbeispiel, welches beispielhaft in einer nicht anspruchsgemäßen Variante in den Fig. 13 bis 15 dargestellt ist, sind ebenfalls diejenigen Teile, die mit denen der voranstehenden Ausführungsbeispiele identisch sind, mit denselben Bezugszeichen versehen, so dass hinsichtlich der Beschreibung derselben vollinhaltlich auf die Ausführungen zu den vorigen Ausführungsbeispielen Bezug genommen werden kann.

Im Gegensatz zu den voranstehenden Ausführungsbeispielen ist beim fünften Ausführungsbeispiel der Bodenbereich 66ʺʺ der Ausnehmungen 60"" so ausgebildet, dass dieser im Bereich der zweiten Stirnseite 18 eine maximale Tiefe aufweist, das heißt eine maximalen Abstand von der Schlüsselflächenebene 46, der sich mit zunehmender Erstreckung des Bodenbereichs 66"" in Richtung der ersten Stirnseite 16 zunehmend reduziert, das heißt, dass der Bodenbereich 66"" insgesamt in einem spitzen Winkel zur Mittelachse 14 verläuft und beim Erreichen des Druckbodens 90 auch die Schlüsselflächenebene 46 erreicht.

Eine Erstreckung der Ausnehmung 60"" von der zweiten Stirnseite 18 in Richtung der ersten Stirnseite 16 ist dabei beispielsweise begrenzt auf einen Teilabschnitt TA des Mutternkörpers 12"", dessen Erstreckung weniger als die Hälfte der Erstreckung des Mutternkörpers 12"" von der ersten Stirnseite 16 zur zweiten Stirnseite 18 beträgt, wie in Fig. 13 und 15 dargestellt ist. Anspruchsgemäß erstrecken sich die Ausnehmungen 60"" jedoch bis zu dem an der Druckseite vorgesehenen Druckflansch.

Bei diesem Ausführungsbeispiel ist somit ebenfalls die radiale Dicke DG der Wand 34"" des Gewindeträgermantels 30"" bereits bei ungefähr der Hälfte der Erstreckung des Mutternkörpers 12 von der zweiten Stirnseite 18 zur ersten Stirnseite 16 signifikant größer als im Bereich der zweiten Stirnseite 18 und nimmt weiter zu bis zur radialen Dicke DG 1 im Bereich der ersten Stirnseite 16 und des in diesem Bereich vorliegenden Druckflanschs 100.

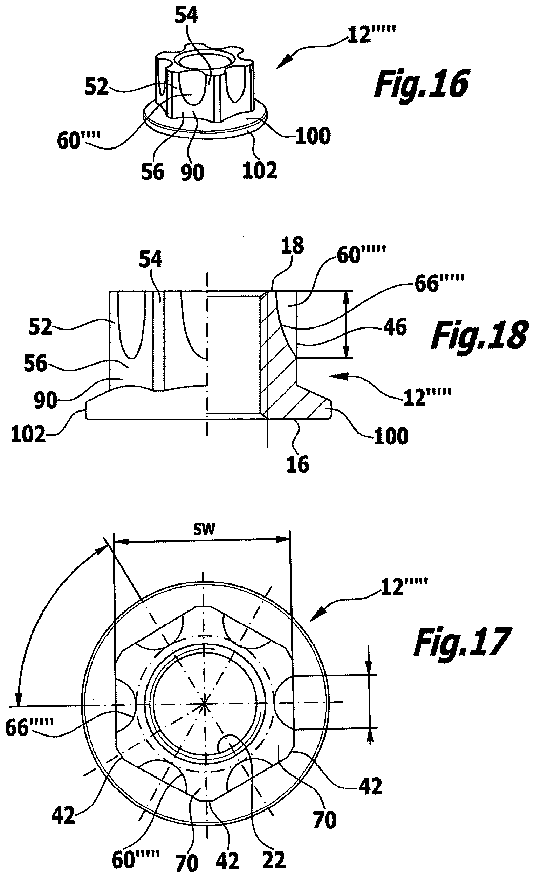

Bei einem sechsten Ausführungsbeispiel, dargestellt in den Fig. 16 bis 18, ist im Gegensatz zum fünften Ausführungsbeispiel der Bodenbereich 66‴ʺ der Vertiefung 60‴ʺ nicht gerade verlaufend ausgebildet, sondern verläuft von der zweiten Stirnseite 18 in Richtung der ersten Stirnseite 16 einer konkav gewölbten Form bis zum Erreichen der jeweiligen Schlüsselflächenebene 46.

Bei der Darstellung einer Variante des sechsten Ausführungsbeispiels in den Fig. 16 bis 18 erstrecken sich die Ausnehmungen nicht bis zu dem an der Druckseite vorgesehenen Druckflansch, sodass insoweit die Abbildung des Ausführungsbeispiels nicht unter den Wortlaut der Ansprüche fällt.

Im Übrigen ist das sechste Ausführungsbeispiel in gleicher Weise ausgebildet wie das fünfte Ausführungsbeispiel, so dass hinsichtlich weiterer Details vollinhaltlich auf die Ausführungen zum fünften Ausführungsbeispiel und auch auf die voranstehenden Ausführungsbeispiele Bezug genommen werden kann.

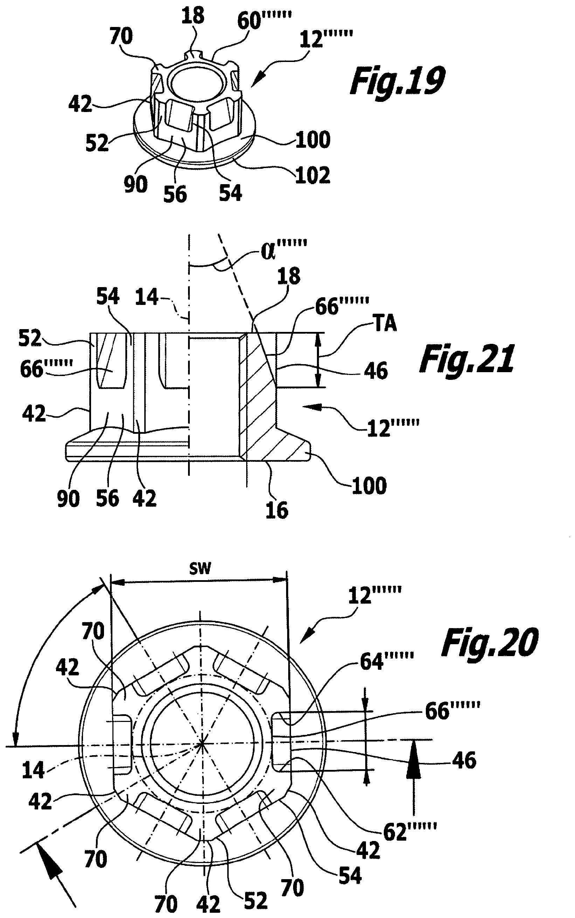

Bei einem siebten Ausführungsbeispiel, welches beispielhaft in einer Variante in den Fig. 19 bis 21 dargestellt ist, erstrecken sich die Ausnehmungen bei der abgebildeten Variante des Ausführungsbeispiels nicht bis zu dem an der Druckseite vorgesehenen Druckflansch, sodass insoweit die abgebildete Variante des Ausführungsbeispiels nicht unter den Anspruchswortlaut fällt.

Bei diesem siebten Ausführungsbeispiel sind die Ausnehmungen 60‴‴ so ausgebildet, dass sie keinen ungefähr U-förmigen Querschnitt aufweisen, wie im Zusammenhang mit den bisher beschriebenen Ausführungsbeispielen dargestellt, sondern einen näherungsweise rechteckförmigen Querschnitt, wobei die Seitenwandbereiche 62‴‴ und 64‴‴ sich zunächst ungefähr senkrecht zur Schlüsselflächenebene 46 in den Mutternkörper 12‴‴ hinein erstrecken und dann mit geringfügigen Rundungen in den Bodenbereich 66‴‴ übergehen, der bis auf die gerundeten Übergänge zu den Seitenwandbereichen 62‴‴ und 64‴‴ in der Querrichtung 48 ungefähr parallel zu der Schlüsselflächenebene 46 zwischen den Seitenwandbereichen 62 und 64 verläuft und außerdem ausgehend von der zweiten Stirnseite 18 mit zunehmender Erstreckung in Richtung parallel zur Mittelachse 14 sich bezüglich der Mittelachse 14 nach außen verläuft und folglich zum Druckflansch 100 hin radial nach außen abfällt.

Somit verläuft der Bodenbereich 66‴‴ ausgehend von der zweiten Stirnseite 18 des Mutternkörpers in Richtung der ersten Stirnseite 16 in einem spitzen Winkel α‴‴ zur Mittelachse 14 zur ersten Stirnseite 16 hin abfallend radial nach außen und erreicht somit nach der Erstreckung über den Teilabschnitt TA die Schlüsselflächenebene 46.

Im Übrigen sind beim siebten Ausführungsbeispiel die weiteren Elemente der Mutter 10 insoweit, als diese mit denen der voranstehenden Ausführungsbeispiele identisch sind, mit denselben Bezugszeichen versehen, so dass vollinhaltlich auf die Ausführungen zu den voranstehenden Ausführungsbeispielen Bezug genommen werden kann.

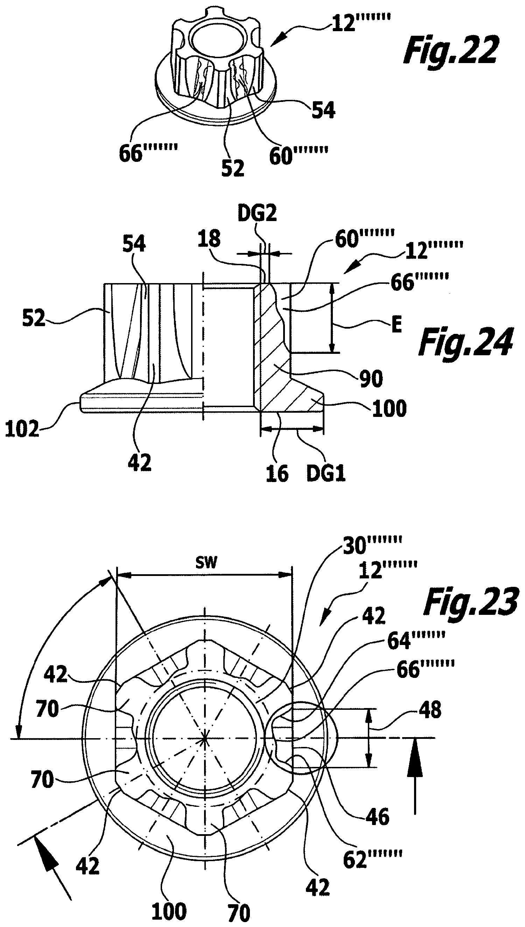

Bei einem achten Ausführungsbeispiel, dargestellt in den Fig. 22 bis 24, ist die Vertiefung 60‴ʺʺ unregelmäßig geformt, so dass beispielsweise der Bodenbereich 66‴ʺʺ teilweise unregelmäßig gewellt ist, sowohl in Richtung seiner Erstreckung von der zweiten Stirnseite 18 in Richtung der ersten Stirnseite 16 des Mutternkörpers 12‴ʺʺ und auch in der Querrichtung 48 zwischen den Kantenbereichen 42, so dass sowohl die Gesamtheit der Seitenwandbereiche 62‴ʺʺ und 64‴ʺʺ in Verbindung mit dem Bodenbereich 66‴ʺʺ jede beliebige unregelmäßige Form haben kann, wobei der maximale Abstand des Bodenbereichs 66‴ʺʺ von der jeweiligen Schlüsselflächenebene 46 die radiale Dicke DG der Wand 34 des Gewindeträgermantels 30‴ʺʺ festlegt.

Dabei erstrecken sich anspruchsgemäß die Ausnehmungen 60‴ʺʺ von der zweiten Stirnseite 18 in Richtung der ersten Stirnseite 16 bis zum Druckflansch 100. Abweichend hiervon weisen die in der Fig. 24 dargestellten Ausnehmungen nur eine Erstreckung über einen Teilabschnitt TA auf, so dass zwischen der jeweiligen Ausnehmung 60‴ʺʺ und dem Druckflansch 100 noch die Ausbildung eines Druckbodens 90 vorliegt.

Im Zusammenhang mit all den voranstehenden Ausführungsbeispielen besteht die Möglichkeit die Mutter als konventionelle Mutter auszuführen, das heißt als eine Mutter, deren Innengewinde 22 möglichst leichtgängig auf den Gewindebolzen 36 aufschraubbar ist und insbesondere keinerlei Klemmdrehmoment beim Aufschrauben oder Abschrauben aufweist und somit über keinerlei Verliersicherung verfügt.

Alternativ ist es jedoch aber auch möglich, die Muttern 10, und insbesondere die Muttern 10 gemäß allen vorstehend beschriebenen Ausführungsbeispielen, als Sicherungsmuttern 10S auszubilden, das heißt diese Muttern so auszubilden, dass beim Aufschrauben des Innengewindes 22 auf den Gewindebolzen 36 ein Klemmdrehmoment auftritt, welches verhindert, dass sich die Mutter aus dem einmal festgeschraubten Zustand aufgrund eines herrschenden Belastungskollektiv selbstständig lösen kann, wobei die Klemmdrehmomente vorzugsweise je nach Anwendungszweck vorgebbar sein sollen.

Anhand des vierten vorstehend dargestellten Ausführungsbeispiels werden nachfolgend verschiedene alternativ oder zusätzlich vorteilhafte Möglichkeiten aufgezeigt, wie Mehrkantmuttern im Allgemeinen, insbesondere jedoch auch gemäß dem ersten bis achten Ausführungsbeispiel ausgebildete Mehrkantmuttern, in einfacher Weise ein definiertes Klemmdrehmoment vorgegeben werden kann.

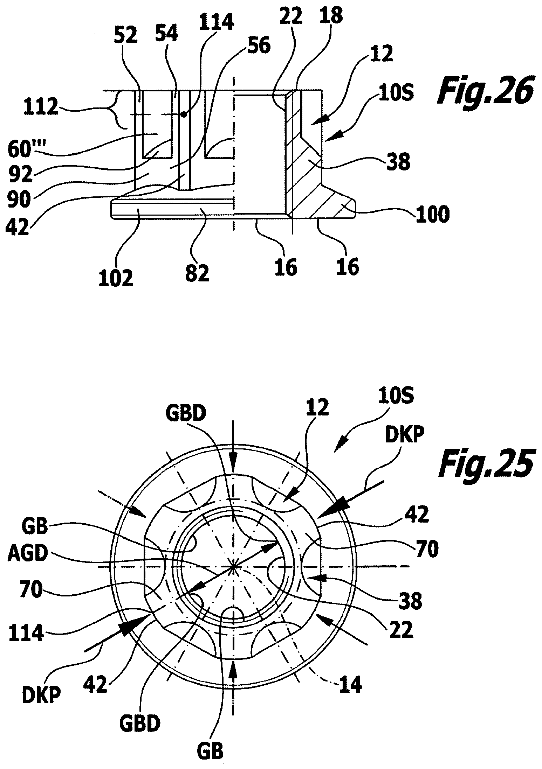

Eine erste Version einer Sicherungsmutter ist beispielhaft in den Fig. 25 und 26 dargestellt, wobei in der dargestellten Version abweichend von dem Anspruchswortlaut die Ausnehmungen sich nicht bis zu dem an der Druckseite vorgesehenen Druckflansch erstrecken und beispielsweise die Abschlusswand 92 anspruchsgemäß so abfallen sollte, dass die Ausnehmungen sich bis zu dem an der Druckseite vorgesehenen Druckflansch erstrecken.

Bei der ersten Version einer Mutter 10S, deren Mutternkörper 12 den Mehrkantabschnitt 38 aufweist, erfolgt eine Deformation des Mehrkantabschnitts 38 durch Einwirken einer punktförmigen Deformationskraft DKP, beispielsweise auf einander gegenüberliegende Kantenabschnitte 42, beispielsweise auf nur zwei einander gegenüberliegende Kantenabschnitte 42 von einander gegenüberliegenden Außenkonturträgern 70, derart, dass unter Deformation des Mehrkantabschnitts 38 eine plastische Verformung des Innengewindes 22 dergestalt erfolgt, dass beispielsweise im Bereich der durch die punktförmigen einwirkenden Deformationskräfte beaufschlagten Außenkonturträger 70 liegende Gewindebereiche GBD, die einander bezüglich der Mittelachse 14 gegenüberliegen, einen geringeren Abstand AGD voneinander aufweisen, als außerhalb der Gewindebereiche GBD liegende Gewindebereiche GB, so dass die beim Aufschrauben dieser Mutter 10S gemäß der ersten Version die deformierten Gewindebereiche GBD, deren Abstand AGD geringer ist als durch die Norm vorgegeben, beim Einschrauben des Gewindebolzens 36 mit dem Außengewinde 35 in das Innengewinde 22 das Innengewinde 22 durch elastoplastische Deformation des Mehrkantabschnitts 38 wieder auf das Maß des einzuschraubenden Gewindebolzens 36 aufgeweitet wird, so dass der Mehrkantabschnitt 38, der eine globale elastoplastische Formfestigkeit aufweist, vorrangig als Ganzes eine elastoplastische Formveränderung erfährt und daher hierauf eine Reaktionskraft erzeugt, mit welcher die deformierten Gewindebereiche GBD auf das Außengewinde 35 des einzuschraubenden Gewindebolzens 36 drücken und somit das erwünschte Klemmdrehmoment erzeugen.

Da bei diesem Ausführungsbeispiel die durch die punktförmigen Deformationskräfte DKP erzeugte plastische Deformation des Mehrkantabschnitts 38 vorrangig eine globale Deformation des Mehrkantabschnitts 38 darstellt, werden die durch die elastoplastische Formveränderung erzeugten Kräfte, mit denen die deformierten Gewindeabschnitte GBD auf das Außengewinde 35 des einzuschraubenden Gewindebolzens 36 wirken, ebenfalls vorrangig durch die globale elastoplastische Formfestigkeit des Mehrkantabschnitts 38 bestimmt. Die Einwirkung der punktförmigen Deformationskräfte DKP auf die Kantenabschnitte 42 erfolgt vorzugsweise in einem nahe der zweiten Stirnseite 18 liegenden oberen Bereich 112 der Kantenbereiche 42, da in diesem oberen Bereich 112 der Mehrkantabschnitt 38 eine größere plastische Verformbarkeit aufweist als im Bereich des Druckbodens 90 oder des Druckflansches 100, so dass der Weg, den das Außengewinde 68 des Gewindebolzens 36 durch den mit minimalem Abstand AGD deformierten Bereich zurücklegt, geringer ist.

Vorzugsweise erstreckt sich dabei der obere Bereich 112 ausgehend von der zweiten Stirnseite 18 bis maximal einer Hälfte der Erstreckung der Ausnehmung 60"' von der zweiten Stirnseite 18 in Richtung der ersten Stirnseite 16 oder der Druckseite 82, vorzugsweise bis zu einem Drittel der Erstreckung der Ausnehmung 60"' von der zweiten Stirnseite 18 in Richtung der ersten Stirnseite 16.

Bei der ersten Version der Sicherungsmutter 10S sind die punktförmig einwirkenden Deformationskräfte DKP so ausgerichtet, dass sie radial und quer zur Mittelachse 14, vorzugsweise senkrecht zu dieser, wirken.

Es besteht aber auch die Möglichkeit, die punktförmig einwirkenden Deformationskräfte DKP entweder mit einer Komponente in Richtung der ersten Stirnseite 16 oder beide mit einer Komponente in Richtung der zweiten Stirnseite 18 wirken zu lassen.

Die punktförmig einwirkenden Kräfte DKP hinterlassen am Mutternkörper 12 punktförmige Druckstellen 114, an denen deren Einwirkung erkennbar ist.

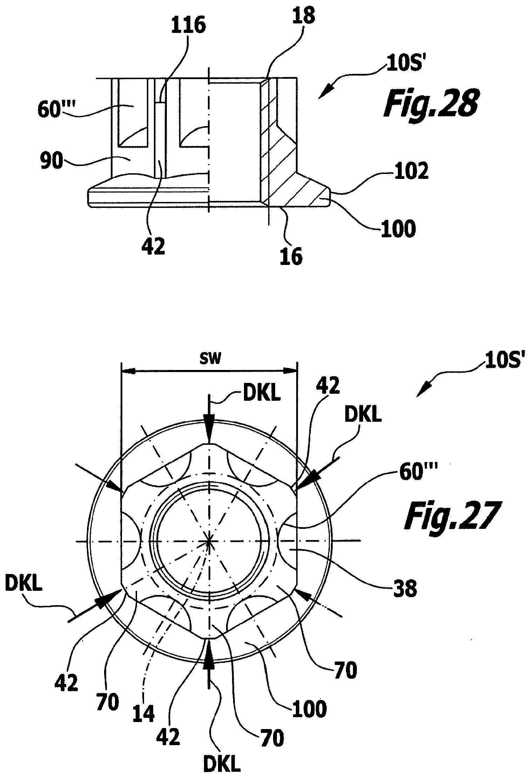

Eine zweite Version einer Sicherungsmutter 10S' ist beispielhaft in den Fig. 27 und 28 dargestellt, wobei bei der dargestellten Variante sich die Ausnehmungen nicht bis zu dem an der Druckseite vorgesehenen Druckflansch erstrecken, und so die dargestellte Variante nicht unter den Anspruchswortlaut fällt und bei anspruchsgemäßen Varianten der Version sich die Ausnehmungen bis zu dem an der Druckseite vorgesehenen Druckflansch erstrecken.

Bei der zweiten Version einer Sicherungsmutter 10S' erfolgt die Einwirkung der Deformationskräfte nicht in Form von punktförmig einwirkenden Deformationskräften DKP, sondern in Form von linienförmig einwirkenden Deformationskräften DKL auf die Kantenbereiche 42 im oberen Bereich 112, die ebenfalls zu Deformationen des Mehrkantabschnitts 38 ähnlich der im Zusammenhang mit der ersten Version beschriebenen Art und Weise führen, wobei mit den linienförmig einwirkenden Deformationskräften DKL ebenfalls im Wesentlichen eine Deformation des Mehrkantabschnitts 38 als Ganzes erfolgt.

In gleicher Weise wie bei der ersten Version können die linienförmig einwirkenden Deformationskräfte DKL zwei paarweise bezüglich der Mittelachse 14 einander gegenüberliegend einwirkende Deformationskräfte DKL sein oder mehrere vorzugsweise jeweils in regelmäßigen Winkelabständen bezüglich der Mittelachse 14 angeordnete einwirkende Deformationskräfte DKL sein, wobei näherungsweise ähnliche Deformationen des Mehrkantabschnitts 38 wie bei der ersten Version auftreten und wobei die Deformationskräfte DKL linienförmige Druckstellen 116 am Mutternkörper 12 hinterlassen.

Auch bei dem Einsatz der linienförmig einwirkenden Deformationskräfte DKL gemäß der zweiten Version sind die linienförmig einwirkenden Deformationskräfte DKL so gerichtet, dass sie quer zur Mittelachse 14, beispielsweise senkrecht zu dieser verlaufen.

Es besteht aber auch die Möglichkeit, die linienförmig einwirkenden Deformationskräfte DKL entweder beide mit einer Komponente in Richtung der ersten Stirnseite 16 oder beide mit einer Komponente in Richtung der zweiten Stirnseite 18 wirken zu lassen.

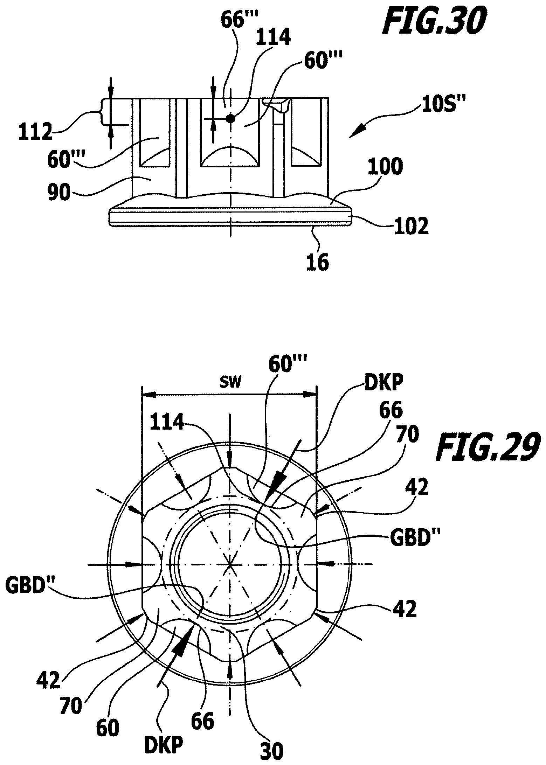

Eine dritte Version einer Sicherungsmutter 10S" ist beispielhaft in den Fig. 29 und 30 dargestellt. Bei der in Fig. 30 dargestellten Variante erstrecken sich die Ausnehmungen jedoch nicht wie anspruchsgemäß vorgesehen bis zu dem an der Druckseite vorgesehenen Druckflansch und bei anspruchsgemäßen Varianten der dritten Version erstrecken sich die Ausnehmungen bis zu dem an der Druckseite vorgesehenen Druckflansch.

Bei der dritten Version einer Sicherungsmutter wird ebenfalls ein Mutternkörper 12 gemäß dem vierten Ausführungsbeispiel eingesetzt und es erfolgt eine Einwirkung in diesem Fall nicht im Bereich der Außenkonturträger 70, sondern im Bodenbereich 66"' der Vertiefungen 60"', wobei bei der dritten Version ebenfalls punktförmig einwirkende Deformationskräfte DKP im oberen Bereich 112 eingesetzt werden, die vorrangig zu einer Deformation von an die punktförmigen Druckstellen 114 angrenzenden Teilbereichen des Gewindeträgermantels 30 führen und somit deformierte Gewindebereiche GBD" erzeugen, wobei die Deformation stärker lokalisiert ist, da auch bereits der Gewindeträgermantel 30 im Gegensatz zu den Außenkonturträgern 70 aufgrund einer geringeren Dicke eine primär lokale elastoplastische Deformation erfährt, die sich ebenfalls in einer lokalen elastoplastischen Deformation des Innengewindes 22 und somit zu einem lokalisierten deformierten Gewindebereich GBD" führt.

Beim Aufschrauben einer derartigen Sicherungsmutter 10S" gemäß der dritten Version auf das Außengewinde 35 eines Gewindebolzens 36 wird die auf die deformierten Gewindebereiche GBD" wirkende durch die elastoplastische Verformung erzeugte Kraft dadurch erzeugt, dass primär die lokale plastische Deformation des Gewindeträgermantels 30 durch lokale elastoplastische Rückverformung des Gewindeträgermantels 30 beim Eindrehen des Gewindebolzens 36 zumindest teilweise zurückgebildet wird.

Dabei kann sich aber auch die lokale elastoplastische Rückformung noch zusätzlich überlagern, mit einer Gesamtdeformation des Mehrkantabschnitts 38, die es erlaubt, die deformierten Gewindebereiche GBD" soweit wieder auseinander zu bewegen, dass der Gewindebolzen 36 in das Innengewinde 22 eingeschraubt werden kann, allerdings unter Erzeugung des gewünschten Klemmdrehmoments.

Die durch die Einwirkung auf den Bodenbereich 66"' der Ausnehmung 60"' vorrangig lokal erzeugten Deformation lässt sich aber auch zusätzlich noch kombinieren mit einer vorrangig globalen Deformation des Mehrkantabschnitts 38 durch ergänzende Einwirkung von Deformationskräften DKP oder DKL auf die Kantenbereiche 42, wie im Zusammenhang mit der ersten oder zweiten Version beschrieben.

Die gemäß der dritten Version punktförmig wirksamen Deformationskräfte DKP sind vorzugsweise ebenfalls quer zur Mittelachse 14, insbesondere senkrecht zu dieser gerichtet.

Es besteht aber auch die Möglichkeit, diesen punktförmig einwirkenden Deformationskräften DKP eine Komponente in Richtung der ersten Stirnseite 16 oder der zweiten Stirnseite 18 zu verleihen.

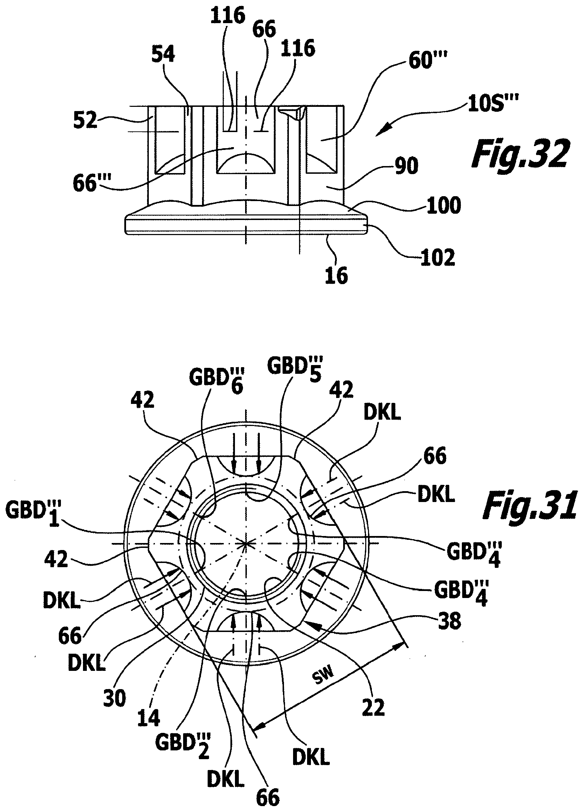

Eine Variante einer vierten Version einer Sicherungsmutter 10S‴ ist beispielhaft in Fig. 31 und 32 dargestellt. Jedoch sind die Ausnehmungen bei der in der Fig. 32 dargestellten Variante entgegen dem Anspruchswortlaut als nicht bis zu dem an der Druckseite vorgesehenen Druckflansch sich erstreckend dargestellt. Bei anspruchsgemäßen Varianten der dritten Version erstrecken sich die Ausnehmungen bis zu dem an der Druckseite vorgesehenen Druckflansch.

Bei der vierten Version einer Sicherungsmutter 10S‴ erfolgt im Bodenbereich 66 keine punktförmige Einwirkung, sondern es werden linienförmig einwirkende Deformationskräfte DKL eingesetzt, die bei dieser Version beispielsweise in allen Bodenbereichen 66 des Mehrkantabschnitts 38 wirksam sind, um entsprechend der Zahl der Bodenbereiche 66 mehrfach um die Mittelachse 14 herum, beispielsweise die deformierten Gewindebereiche GBD‴₁ bis GBD‴₆, die vorrangig durch lokale Deformation des Gewindeträgermantels 30 entstehen, zu erzeugen, so dass diese sechs um die Mittelachse 14 herum angeordneten deformierten Gewindebereiche GBD‴₁ bis GBD‴₆ für das zu erzeugende Klemmdrehmoment des Innengewindes 22 beim Aufschrauben desselben auf einen Gewindebolzen 36 verantwortlich sind.

Die bei der vierten Version vorgesehenen linienförmig einwirkenden Deformationskräfte DKL verlaufen beispielsweise quer zur Mittelachse 14, vorzugsweise senkrecht zu dieser oder auch mit einer Komponente in Richtung der ersten Stirnseite 16 oder der zweiten Stirnseite 18, und hinterlassen die linienförmigen Druckstellen 116.

Grundsätzlich können Betrag und Richtung linienförmig deformierten Gewindebereiche GBD‴₁ bis GBD‴₆ paarweise unterschiedlich sein.

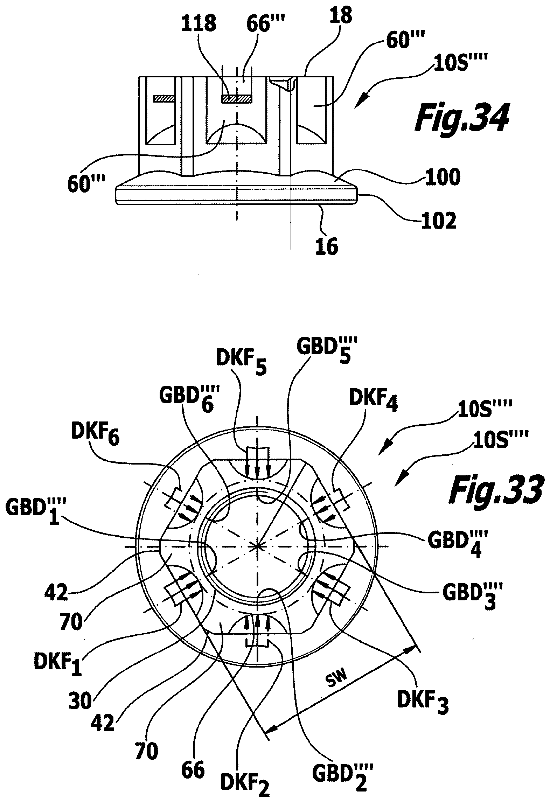

Varianten einer fünften Version einer Sicherungsmutter 10S"" sind in den Fig. 33 und 34 dargestellt. Jedoch sind bei der in Fig. 34 dargestellten Variante die Ausnehmungen entgegen dem Anspruchswortlaut nicht als sich bis zu dem an der Druckseite vorgesehenen Druckflansch erstreckend ausgebildet und bei anspruchsgemäßen Varianten der fünften Version erstrecken sich die Ausnehmungen bis zu dem an der Druckseite vorgesehenen Druckflansch.

Bei der fünften Version einer Sicherungsmutter 10S"" können alternativ zu punktförmig einwirkenden Kräften DKP oder linienförmig einwirkenden Kräften DKL auch flächenhaft einwirkende Kräfte DKF eingesetzt werden, die bei der fünften Version flächenförmig im Bodenbereich 66"' der Ausnehmungen 60"' unter Erzeugung von flächenförmigen Druckstellen 118 einwirken und somit entsprechend der flächenförmigen Einwirkung eine nach wie vor vorrangig lokale jedoch über einen größeren Flächenbereich verteilte elastoplastische Deformation des Gewindeträgermantels 30 und somit großflächiger ausgebildete deformierte Gewindebereiche GBD"" erzeugen.

Auch derartig flächenhaft in den Bodenbereichen 66‴ einwirkenden Deformationskräfte DKF können entweder in einem Paar von einander gegenüberliegenden Bodenbereichen 66‴ wirksam sein oder in drei einzelnen oder mehreren paarweise einander gegenüberliegenden Bodenbereichen 66‴ oder aber auch kombiniert mit in den Kantenbereichen 42 einwirkenden Deformationskräften, seien es punkförmige Deformationskräfte DKP oder linienförmige Deformationskräfte DKL oder auch gegebenenfalls flächenförmige Deformationskräfte DKF.

Bei der fünften Version sind die flächenförmig einwirkenden Deformationskräfte DKF primär so ausgerichtet, dass sie quer zur Mittelachse 14 wirken, wobei die flächenhaft einwirkenden Deformationskräfte DKF aber auch beide jeweils eine Komponente in Richtung der ersten Stirnseite 16 oder in Richtung der zweiten Stirnseite 18 aufweisen können, um im Bereich einer Teilfläche ihrer Einwirkung noch eine verstärkte plastische Deformation, insbesondere eine vorrangig lokale plastische Deformation im Gewindeträgerkörper 30 und somit auch dem entsprechenden deformierten Gewindebereich GBD"" des Innengewindes 22 erzeugen zu können.

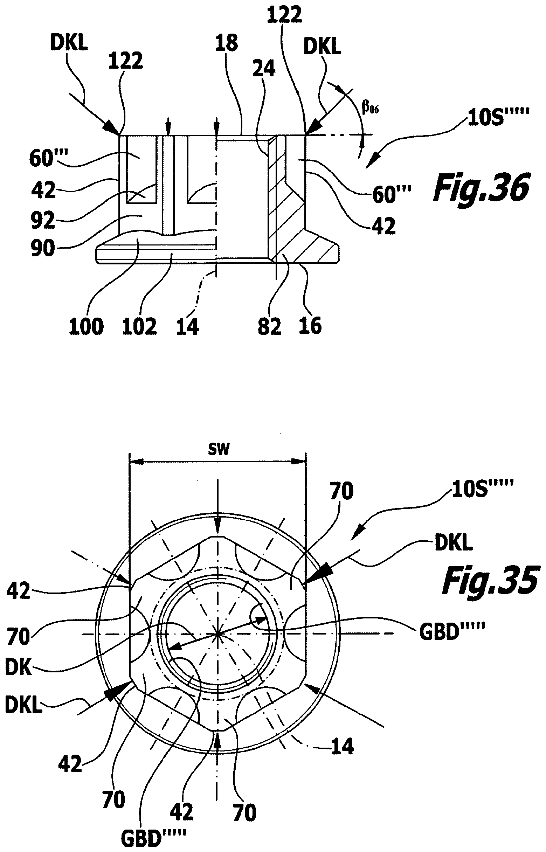

Varianten einer sechsten Version einer Sicherungsmutter 10S‴ʺ sind beispielhaft in Fig. 35 und 36 dargestellt. Jedoch sind bei der in Fig. 36 dargestellten Variante die Ausnehmungen entgegen dem Anspruchswortlaut nicht als sich bis zu dem an der Druckseite vorgesehenen Druckflansch erstreckend dargestellt und bei anspruchsgemäßen Varianten der sechsten Version erstrecken sich die Ausnehmungen zu dem an der Druckseite vorgesehenen Druckflansch.

Bei der sechsten Version einer Sicherungsmutter 10S‴ʺ erfolgt eine Einwirkung auf die Kantenbereiche 42 nicht in dem oberen Bereich 112, sondern beispielsweise über linienförmig einwirkende Deformationskräfte DKL auf eine an die zweite Stirnseite 18 angrenzende obere äußere Kante 122 zwischen der zweiten Stirnseite 18 und beispielsweise zwei einander gegenüberliegenden Kantenbereichen 42 oder mehreren jeweils paarweise einander gegenüberliegenden Kantenbereichen 42, so dass jeweils auf die Außenkonturträger 70 die Deformationskräfte DKL einwirken und somit zu einer vorrangig globalen Deformation des Mehrkantabschnitts 38 in unmittelbarem Anschluss an die zweite Stirnseite 18 führt, so dass insbesondere deformierte Gewindebereiche GBD‴ʺ im Bereich der sich unmittelbar an die zweite Stirnseite 18 anschließenden Gewindegänge des Innengewindes 32 entstehen.

Dabei sind die linienförmig einwirkenden Deformationskräfte DKL vorzugsweise so gerichtet, dass sie einerseits in Richtung der Mittelachse 14 und andererseits in Richtung der ersten Stirnseite 16 oder Druckseite 82 wirken.

Auch bei diesem Ausführungsbeispiel können lediglich zwei, aneinander bezüglich der Mittelachse 14 gegenüberliegende Deformationskräfte DKL wirksam sein oder auch mehrere jeweils paarweise einander gegenüberliegende Deformationskräfte DKL.

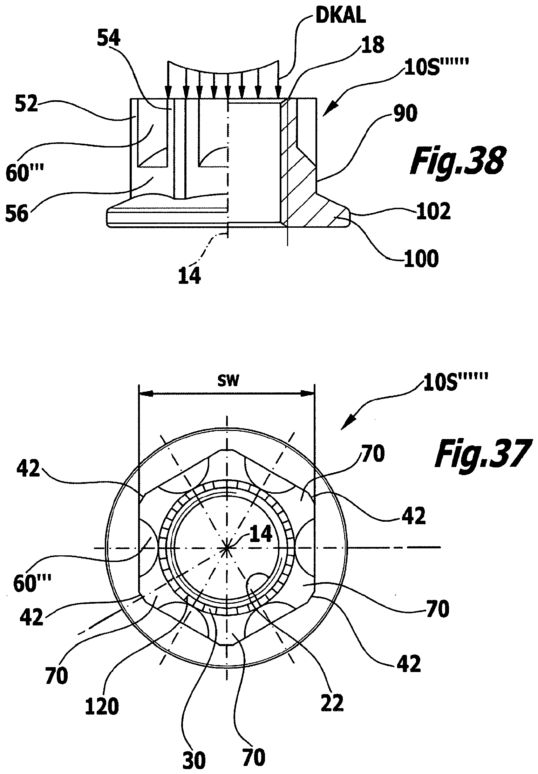

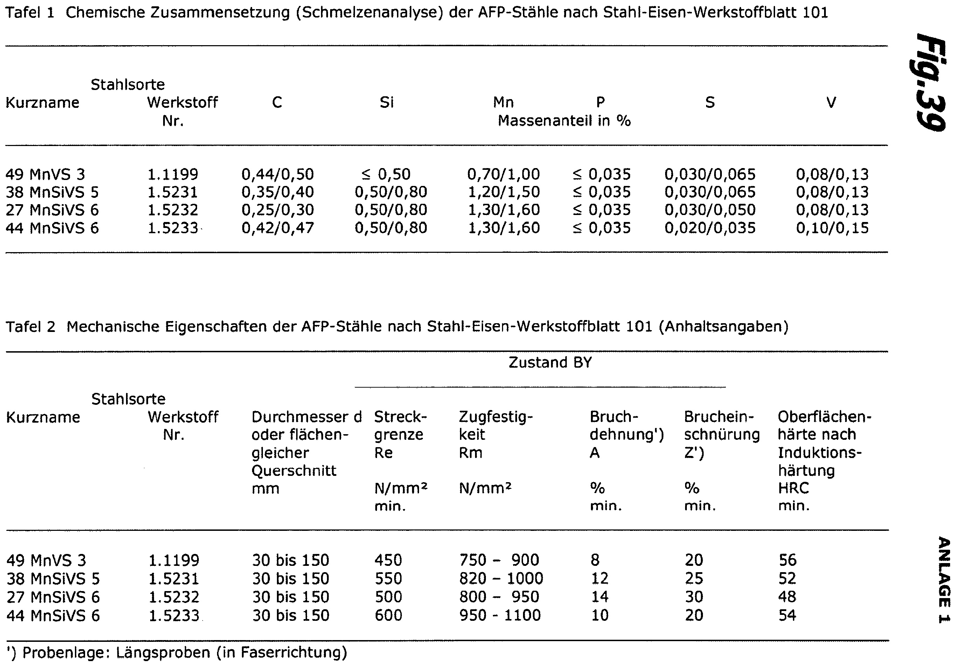

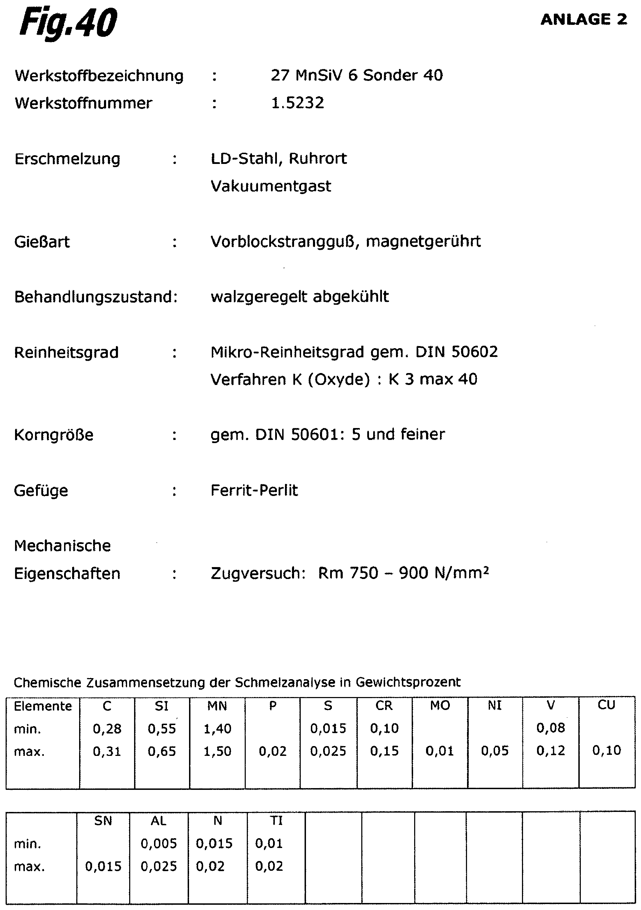

Varianten einer siebten Version einer Sicherungsmutter 10S‴‴ sind beispielhaft in Fig. 37 und 38 dargestellt. Bei der in Fig. 38 dargestellten Variante sind jedoch die Ausnehmungen entgegen dem Anspruchswortlaut sich nicht bis zu dem an der Druckseite vorgesehenen Druckflansch erstreckend dargestellt und bei anspruchsgemäßen Varianten der siebten Version erstrecken sich die Ausnehmungen zu dem an der Druckseite vorgesehenen Druckflansch.

Bei der siebten Version einer Sicherungsmutter 10S‴‴ wirken parallel zur Mittelachse 14 ausgerichtete axiale Deformationskräfte DKAL linienförmig, und zwar radial zur Mittelachse 14 ausgerichtet, auf die zweite Stirnseite 18 im Bereich des Gewindeträgermantels 30 unter Erzeugung von linienförmigen Druckstellen 120 ein und führen zu einer um die Mittelachse 14 umlaufenden plastischen Deformation des sich an die zweite Stirnseite 18 anschließenden ersten Gewindegangs 24 des Innengewindes 22, der dadurch beispielsweise insgesamt eine Verengung hinsichtlich seines Kernlochdurchmessers DK erfährt, und in Richtung der Mittelachse 14 bezüglich einem Normverlauf deformierte Gewindebereiche aufweist, deren Abstand bezogen auf die Normsteigung reduziert ist. Diese Deformation, die beim Einschrauben des Gewindebolzens 36 in das Innengewinde 22 führt insgesamt zu einer elastoplastischen Aufweitung des Mehrkantabschnitts 38 insbesondere nahe der zweiten Stirnseite 18, wobei diese elastoplastische Aufweitung wieder zu einer die ersten Gewindegänge gegen das Außengewinde 35 des eingeschraubten Gewindebolzen 36 drückenden Reaktionskräfte führt, die somit für das gewünschte Klemmdrehmoment verantwortlich ist.

Generell besteht bei den ersten bis siebten Versionen die Möglichkeit, die durch die Deformationskräfte DK erzeugbaren plastischen Deformationen, die sich auf den Abstand von Gewindebereichen von der Mittelachse 18 und den Verlauf der Gewindegänge relativ zueinander auswirken, miteinander zu kombinieren um somit beispielsweise auch durch Mehrfachdeformationen des Mehrkantabschnitts 38 das gewünschte Klemmdrehmoment beim Aufschrauben und Abschrauben des Innengewindes auf einen Gewindebolzen zu erreichen.

Eine Mutter 10 lässt sich vorzugsweise aus einem Werkstoff mit einer bainitischen oder ferritisch-perlitischen Grundstruktur gemäß Anlage 1 herstellen. Bei beiden Werkstoffarten wird durch eine gezielte Steuerung der Gefügewandlung eine vorteilhafte Kombination aus Zugfestigkeit und Verformbarkeit erreicht.

Es werden durch Zulegieren von Mikrolegierungselementen und thermomechanischen Vorbehandlungsverfahren Eigenschaften vor dem eigentlichen Umformvorgang generiert, die infolge der eigentlichen Umformung (Abkühlen aus der Schmiedhitze bei Warmumformvorgängen oder Erhöhung der Versetzung bei Kaltumformvorgängen) in definierten strukturmechanischen Eigenschaften führen, die beispielsweise bei Verwendung konventioneller Kaltstauchgüten durch einen gesonderten Wärmebehandlungsprozess nach dem eigentlichen Umformvorgang eingestellt werden müssten.

Ausgehend von einem Werkstoff mit einer derartigen bainitischen oder ferritisch-perlitischen Grundstruktur erfolgt beispielsweise eine Kaltumformung oder ein Fließpressen eines Ausgangsmaterials, beispielsweise eines Drahtes oder eines Stangenmaterials in mindestens einer Umformstufe oder in mehreren Umformstufen bis zu einer Form des Mutternkörpers 12 gemäß einem der vorstehend beschriebenen Ausführungsbeispiele und/oder einer der vorstehende beschriebenen Versionen.

Bei diesem Umformvorgang des vorstehend genannten Werkstoffs erfolgt durch Ausbildung von Versetzungen und/oder Erhöhung der Versetzungsdichte eine Verfestigung des Werkstoffs aufgrund der inhomogenen Querschnittsausbildung in unterschiedlicher Stärke, wobei insbesondere im Bereich mit dünnerem Querschnitt eine stärkere Verformung auftritt als in Bereichen mit entsprechend dickerem Querschnitt.

Insbesondere führt die Umformung zu einer Steigerung der Festigkeit um mindestens 5% gegenüber dem Ausgangsmaterial, noch besser um mindestens 10% oder noch besser mindestens 20% ausgehend von Festigkeitswerden des Ausgangsmaterials.

Beispielsweise erfolgt eine stärkere Verfestigung des Gewindeträgermantels 30 des Mutternkörpers 12 im Bereich der Ausnehmungen 60, die zu einer verbesserten Stabilisierung des Innengewindes 22 gegen eine Deformation bei Belastung durch den Gewindebolzen 36 beiträgt. Hierbei kann infolge des durch die Umformung erzeugten Versetzungsdichtegradienten ausgehend von den Schlüsselflächen 44 zunehmend zum Gewindeträgermantel 30 auf eine mögliche, auf den Umformvorgang folgende Wärmebehandlung, verzichtet werden, da im Bereich höherer strukturmechanischen Anforderungen, wie dem Gewindeträgermantel 30, durch die Kombination von höherer Versetzungsdichte und Werkstoff mit bainitischer oder ferritisch-perlitischer Grundstruktur eine ausreichende Härte erzielt werden kann.

Beispielsweise liegt die Härte des Gewindeträgermantels 30 für Feingewinde im Bereich von 180 bis 360 HV, für Regelgewinde im Bereich von 110 bis 360 HV.

Als Beispiel für einen ausscheidungshärtenden ferritisch-perlitischen Werkstoff oder ausscheidungshärtenden ferritisch-perlitischen Stahl, der eine gute Kaltverformbarkeit aufweist, wird beispielsweise auf das Material 24MnSiV5 oder auf den Werkstoff 27MnSiV6 40 verwiesen, wobei der letztgenannte Werkstoff die in Anlage 2 aufgelisteten Eigenschaften sowie die in Anlage 2 genannte chemische Zusammensetzung aufweist.

Hierbei wird die Festigkeit durch Mischkristallverfestigung mit Si, Mn und /oder Ausscheidungshärtung mit Va, Nb, Ti erreicht.

## Patentansprüche

1. Mutter, umfassend einen im Bereich einer Bohrung (20) mit einem Innengewinde (22) versehenen oder versehbaren Mutternkörper (12), der einen Mehrkantabschnitt (38) mit einer Mehrkantaußenkontur (40) aufweist, die einerseits Kantenbereiche (42) und andererseits zwischen den Kantenbereichen (42) liegenden Schlüsselflächen (44) aufweist, die sich in normgerecht verlaufenden Schlüsselflächenebenen (46) erstrecken, wobei der Mutternkörper (12) mehrere sich ausgehend von den jeweiligen Schlüsselflächenebenen (46) in den Mutternkörper (12) hinein in Richtung der Bohrung (20) erstreckende Ausnehmungen (60) aufweist, wobei der Mutternkörper (12) eine als Druckseite (82) mit einer Druckfläche (84) ausgebildete erste Stirnseite (16) und eine der Druckseite (82) abgewandte zweite Stirnseite (18) aufweist, wobei die Ausnehmungen (60) sich von der jeweiligen Schlüsselflächenebene (46) bis zu einem die mit dem Innengewinde (22) versehene oder versehbare Bohrung (20) stabilisierend umschließenden Gewindeträgermantel (30) erstrecken, und wobei an der Druckseite (82) ein Druckflansch (100) vorgesehen ist, welcher sich radial über den Mehrkantabschnitt (38) hinaus erstreckt, und in dessen Bereich eine radiale Mindestdicke (DG) des Gewindeträgermantels (30) größer ist als im Bereich der zweiten Stirnseite, und wobei sich die Ausnehmungen (60) bis zu dem an der Druckseite (82) vorgesehenen Druckflansch (100) erstrecken,
**dadurch gekennzeichnet, dass** der Gewindeträgermantel (30) mit zunehmender Erstreckung von der zweiten Stirnseite (18) zur Druckseite (16) eine zunehmende radiale Mindestdicke (DG) aufweist.

2. Mutter nach Anspruch 1, **dadurch gekennzeichnet, dass** sich die Ausnehmungen (60) bis zur zweiten Stirnseite (18) erstrecken.

3. Mutter nach einem der Ansprüche 1 oder 2, **dadurch gekennzeichnet, dass** sich die Ausnehmungen (60) nur über einen Teilabschnitt (TA) der Erstreckung des Mutternkörpers (12) von der einen Stirnseite (18) zur anderen Stirnseite (16) erstrecken.

4. Mutter nach einem der voranstehenden Ansprüche, **dadurch gekennzeichnet, dass** in jeder senkrecht zu einer Mittelachse (14) des Innengewindes (22) verlaufenden Querschnittsebene (QE) durch den Mehrkantabschnitt (38) die Summe der Ausdehnung der Schlüsselflächenbereiche (52, 54) in einer Querrichtung (48) zwischen jeweils zwei aufeinanderfolgenden Kantenbereichen (42) mindestens 10% eines Abstandes (AK) dieser Kantenbereiche (42) in der Querrichtung (48) beträgt.

5. Mutter nach einem der voranstehenden Ansprüche, **dadurch gekennzeichnet, dass** die Ausnehmungen (60) in einer jeweils senkrecht zu einer Mittelachse (14) des Innengewindes (22) durch den Mehrkantabschnitt (38) verlaufenden Querschnittsebene (QE) dieselbe Querschnittsform aufweisen.

6. Mutter nach einem der voranstehenden Ansprüche, **dadurch gekennzeichnet, dass** die Ausnehmungen (60) eine Querschnittsform aufweisen, welche durch einen Bodenbereich (66) und sich an den Bodenbereich (66) anschließende, quer zu der jeweiligen Schlüsselflächenebene (46) verlaufende Seitenwandbereiche (62, 64) bestimmt ist.

7. Mutter nach einem der voranstehenden Ansprüche, **dadurch gekennzeichnet, dass** die Ausnehmungen (60) eine mit der Erstreckung in einer Richtung parallel zur Mittelachse (14) konstante oder variierende Querschnittsform aufweisen.

8. Mutter nach einem der voranstehenden Ansprüche, **dadurch gekennzeichnet, dass** der Bodenbereich (66) über die Erstreckung in Richtung der Mittelachse (14) einen variierenden Abstand von der Mittelachse (14) aufweist.

9. Mutter nach einem der voranstehenden Ansprüche, **dadurch gekennzeichnet, dass** das Innengewinde (22) zur Ausbildung der Mutter als Sicherungsmutter (10S) als Normmaßen entsprechendes Innengewinde hergestellt, jedoch durch plastische Deformation des Mutternkörpers (12) von einem Normverlauf abweichend ausgebildet ist.

10. Mutter nach Anspruch 9, **dadurch gekennzeichnet, dass** das Innengewinde (22) aufgrund der plastischen Deformation des Mutternkörpers (12) von einem Normverlauf abweichende variierende radiale Abstände (AGD) von der Mittelachse (14) und/oder von einem Normverlauf abweichende Abstandsverläufe der Gewindegänge aufweist.

11. Mutter nach einem der voranstehenden Ansprüche, **dadurch gekennzeichnet, dass** der Mutternkörper (12) aus Stahl mit einem bainitischen oder ferritisch-perlitischen Gefüge hergestellt ist.

12. Mutter nach Anspruch 11, **dadurch gekennzeichnet, dass** das bainitische oder ferritisch-perlitische Gefüge durch thermomechanische Vorbehandlung gesteigerte Festigkeitseigenschaften aufweist.

13. Mutter nach einem der Ansprüche 11 oder 12, **dadurch gekennzeichnet, dass** das bainitische oder ferritisch-perlitische Gefüge eine Mischkristallverfestigung durch Silizium und/oder Mangan aufweist.

## Claims

1. A nut, comprising a nut body (12) provided or providable in the region of a bore (20) with an internal thread (22) and having a polygonal section (38) with a polygonal outer contour (40), which on the one hand has edge regions (42) and on the other hand key faces (44) between the edge regions (42), the key faces extending in key face planes (46) extending in a manner conforming to standards, wherein the body (12) has a plurality of recesses (60) extending from the respective key face planes (46) into the nut body (12) in the direction of the bore (20), wherein the nut body (12) has a first end face (16) configured as a pressure side (82) with a pressure face (84) and a second end face (18) facing away from the pressure side (82), wherein the recesses (60) extend from the respective key face planes (46) to a thread-bearing casing (30) which, in a stabilising manner, surrounds the bore (20) provided or providable with the internal thread (22), and wherein there is provided at the pressure side (82) a pressure flange (100), which extends radially beyond the polygonal section (38), and in the region of which a minimum radial thickness (DG) of the thread-bearing casing (30) is larger than in the region of the second end face, and wherein the recesses (60) extend up to the pressure flange (100) provided at the pressure side (82),
**characterised in that** the thread-bearing casing (30) has an increasing minimal radial thickness (DG) with increasing extent from the second end face (18) to the pressure face (16).

2. A nut according to claim 1, **characterised in that** the recesses (60) extend up to the second end face (18).

3. A nut according to claim 1 or 2, **characterised in that** the recesses (60) extend only over a partial section (TA) of the extent of the nut body (12) from the first end face (18) to the other end face (16).

4. A nut according to any of the preceding claims **characterised in that**, in each cross-sectional plane (QE) through the polygonal section (38) extending perpendicularly to a central axis (14) of the internal thread (22), the sum of the extent of the key face regions (52, 54) in a transverse direction (48) between each two successive edge regions (42) amounts to at least 10% of a spacing (AK) of these end regions (42) in the transverse direction (48).

5. A nut according to any of the preceding claims, **characterised in that** the recesses (60) have the same cross-sectional shape in a cross-sectional plane (QE) extending through the polygonal section (38) in each case perpendicularly to a central axis (14) of the internal thread (22).

6. A nut according to any of the preceding claims, **characterised in that** the recesses (60) have a cross-sectional shape, which is determined by a base region (66) and side wall regions (62, 64) adjoining the base region (66) and extending transversely to the respective key face plane (46).

7. A nut according to any of the preceding claims, **characterised in that** the recesses (60) have a cross-sectional shape which, with the extent in a direction parallel to the central axis (14), is constant or varying.

8. A nut according to any of the preceding claims, **characterised in that** the base region (66), over the extent in the direction of the central axis (14), has a varying spacing from the central axis (14).

9. A nut according to any of the preceding claims, **characterised in that** the internal thread (22), in order to configure the nut as a locking nut (10S), is produced as an internal thread corresponding to normal measurements, but is configured to differ from a standard course by plastic deformation of the nut body (12).

10. A nut according to claim 9, **characterised in that** the internal thread (22), on account of the plastic deformation of the nut body (12), has varying radial spacings (AGD) from the central axis (14) differing from a normal course and/or has spacing courses of the thread turns which differ from a standard course.

11. A nut according to any of the preceding claims, **characterised in that** the nut body (12) is produced from steel with a bainitic or ferritic-perlitic structure.

12. A nut according to claim 11, **characterised in** the bainitic or ferritic-perlitic structure has strength properties enhanced by thermo-mechanical pretreatment.

13. A nut according to claim 11 or 12, **characterised in that** the bainitic or ferritic-perlitic structure has a solid solution hardening by silicon and/or manganese.

## Revendications

1. Ecrou comprenant un corps d'écrou (12) pourvu ou pouvant être pourvu d'un filetage intérieur (22) dans la zone d'un alésage (20), qui présente une section polygonale (38) avec un contour extérieur polygonal (40), qui présente d'une part des zones de bord (42) et d'autre part des surfaces de clé (44) se trouvant entre les zones de bord (42), qui s'étendent dans des plans de surfaces de clé (46) s'étendant conformément à la norme, dans lequel le corps d'écrou (12) présente plusieurs évidements (60) s'étendant en partant des plans de surface de clé (46) respectifs à l'intérieur du corps d'écrou (12) en direction de l'alésage (20), dans lequel le corps d'écrou (12) présente un premier côté frontal (16) réalisé en tant que côté de pression (82) avec une surface de pression (84) et un deuxième côté frontal (18) opposé au côté de pression (82), dans lequel les évidements (60) s'étendent depuis le plan de surface de clé (46) respectif jusqu'à une enveloppe de support de filetage (30) renfermant de manière stabilisante l'alésage (20) pourvu ou pouvant être pourvu du filetage intérieur (22), et dans lequel est prévu sur le côté de pression (82) un flasque de pression (100), lequel s'étend radialement au-delà de la section polygonale (38), et dans la zone duquel une épaisseur minimale (DG) radiale de l'enveloppe de support de filetage (30) est plus grande que dans la zone du deuxième côté frontal, et dans lequel les évidements (60) s'étendent jusqu'au flasque de pression (100) prévu sur le côté de pression (82),
**caractérisé en ce que** l'enveloppe de support de filetage (30) présente une épaisseur minimale (DG) radiale qui augmente au fur et à mesure que l'extension du deuxième coté frontal (18) augmente vers le côté de pression (16).

2. Ecrou selon la revendication 1, **caractérisé en ce que** les évidements (60) s'étendent jusqu'au deuxième côté frontal (18).

3. Ecrou selon l'une quelconque des revendications 1 ou 2, **caractérisé en ce que** les évidements (60) s'étendent seulement sur une section partielle (TA) de l'extension du corps d'écrou (12) depuis un côté frontal (18) vers l'autre côté frontal (16) .

4. Ecrou selon l'une quelconque des revendications précédentes, **caractérisé en ce que** la somme de l'extension des zones de surface de clé (52, 54) dans une direction transversale (48) entre respectivement deux zones de bord (42) se suivant l'une l'autre est d'au moins 10 % d'un espacement (AK) desdites zones de bord (42) dans la direction transversale (48) dans chaque plan de section transversale (QE), s'étendant de manière perpendiculaire par rapport à un axe central (14) du filetage intérieur (22), à travers la section polygonale (38).

5. Ecrou selon l'une quelconque des revendications précédentes, **caractérisé en ce que** les évidements (60) présentent la même forme de section transversale dans un plan de section transversale (QE) s'étendant respectivement de manière perpendiculaire par rapport à un axe central (14) du filetage intérieur (22) à travers la section polygonale (38).

6. Ecrou selon l'une quelconque des revendications précédentes, **caractérisé en ce que** les évidements (60) présentent une forme de section transversale, laquelle est définie par une zone de fond (66) et des zones de paroi latérale (62, 64) se raccordant à la zone de fond (66), s'étendant de manière transversale par rapport au plan de surface de clé (46) respectif.

7. Ecrou selon l'une quelconque des revendications précédentes, **caractérisé en ce que** les évidements (60) présentent une forme de section transversale constante ou variable avec l'extension dans une direction de manière parallèle par rapport à l'axe central (14).

8. Ecrou selon l'une quelconque des revendications précédentes, **caractérisé en ce que** la zone de fond (66) présente un espacement variable par rapport à l'axe central (14) sur l'extension en direction de l'axe central (14).

9. Ecrou selon l'une quelconque des revendications précédentes, **caractérisé en ce que** le filetage intérieur (22) est fabriqué pour réaliser l'écrou en tant qu'écrou de blocage (10S) en tant que filetage intérieur correspondant aux cotes standardisées, est réalisé toutefois de manière à s'écarter du profil standardisé du fait de la déformation plastique du corps d'écrou (12).

10. Ecrou selon la revendication 9, **caractérisé en ce que** le filetage intérieur (22) présente, du fait de la déformation plastique du corps d'écrou (12), des espacements radiaux (AGD) variables s'écartant du profil standardisé par rapport à l'axe central (14) et/ou des profils d'espacement, s'écartant du profil standardisé, des spires.

11. Ecrou selon l'une quelconque des revendications précédentes, **caractérisé en ce que** le corps d'écrou (12) est fabriqué à partir d'acier avec une structure bainitique ou ferritique-perlitique.

12. Ecrou selon la revendication 11, **caractérisé en ce que** la structure bainitique ou ferritique-perlitique présente des propriétés de solidité augmentées par prétraitement thermomécanique.

13. Ecrou selon l'une quelconque des revendications 11 ou 12, **caractérisé en ce que** la structure bainitique ou ferritique-perlitique présente une consolidation de cristaux mixtes du fait du silicium et/ou du manganèse.
